# EUROPEAN PATENT SPECIFICATION

(11) **EP 4 250 818 B1**
(45) Date of publication and mention of the grant of the patent: **02.07.2025**
(21) Application number: 22214930.4
(22) Date of filing: 20.12.2022
(51) Int. Cl.: H04W 36/00, H04W 84/12

(54) **ENHANCED LOW-LATENCY HANDOVER FOR MOBILE WI-FI DEVICES**
VERBESSERTE ÜBERGABE MIT NIEDRIGER LATENZ FÜR MOBILE WI-FI-VORRICHTUNGEN
TRANSFERT INTERCELLULAIRE À FAIBLE LATENCE AMÉLIORÉ POUR DISPOSITIFS WI-FI MOBILES

(30) Priority: 25.03.2022 US 202263323879 P
(43) Date of publication of application: 27.09.2023
(73) Proprietor: INTEL Corporation, Santa Clara, CA 95054 (US)
(72) Inventor: DOOSTNEJAD, Roya, Los Altos CA, 94024 (US); BRAVO, Daniel, Portland OR, 97229 (US); RESHEF, Ehud, 36551 Qiryat Tivon (IL)
(74) Representative: Viering, Jentschura & Partner mbB Patent- und Rechtsanwälte

(56) References cited:
- EP-A1- 1 705 835
- WO-A1-2021/112557
- US-A1- 2020 137 651
- "IEEE Standard for Information technology--Telecommunications and information exchange between systems Local and metropolitan area networks--Specific requirements - Part 11: Wireless LAN Medium Access Control (MAC) and Physical Layer (PHY) Specifications;IEEE Std 802.11-2016 (Revision of IEEE Std 802", IEEE STANDARD, IEEE, PISCATAWAY, NJ, USA, 14 December 2016 (2016-12-14), pages 1 - 3534, XP068113034

## Description

### TECHNICAL FIELD

This disclosure generally relates to systems and methods for wireless communications and, more particularly, to low-latency handovers for mobile Wi-Fi devices.

### BACKGROUND

Wireless devices are becoming widely prevalent and are increasingly requesting access to wireless channels. The Institute of Electrical and Electronics Engineers (IEEE) is developing one or more standards that utilize Orthogonal Frequency-Division Multiple Access (OFDMA) in channel allocation.

EP1705835A1 relates to a system and method for fast and smooth roaming in a wireless network with plural access points. In order to keep better communication quality, the client device may have dual-transceiver. One transceiver is applied for transmitting and receiving data packets to and from a current associated access point. Concurrently, the other transceiver would scan for another suitable access point and prepare to re-associate with it. As the communication quality degrades to a predetermined level, which indicates that the linkage between the client device and the currently associated access point might be broken, the transceiver in scanning mode would begin to re-associate with a new access point to reduce the latency time. After that, the transceiver originally in the linking mode would switch to scan for another suitable access point while the other transceiver is associated with the newly associated access point.

WO2021112557A1 relates to a method in which a multi-link device (MLD) may transmit, to an access point (AP), a request frame for changing a primary link. On the basis of the request frame, the MLD may receive a response frame from the AP. On the basis of the response frame, the MLD may determine whether to change the primary link.

US2020137651A1 relates to transitioning between BSSs using on-channel tunneling (OCT). OCT procedures are used for scanning and association with a co-located or non-co-located peer AP. The OCT procedures include communicating a Probe/Re-authentication/Re-association Request frame from a STA using an OCT Request frame to the peer AP and receiving a Probe/Re-authentication/Re-association Response frame from the peer AP using another OCT Request frame. The communications between the STA and the AP are either in the same frequency band or a different frequency band as the OCT communications between the AP and the peer AP.

"IEEE Standard for Information technology - Telecommunications and information exchange between systems Local and metropolitan areanetworks - Specific requirements - Part 11: Wireless LAN Medium Access Control (MAC) and Physical Layer (PHY) Specifications; IEEE Std 802.11-2016 Revision of IEEE Std 802", IEEE STANDARD, IEEE PISCATAWAY, NJ, USA, 14 December 2016, pages 1-3554 is a document specifying technical corrections and clarifications to IEEE Std 802.11 for wireless local area networks (WLANs) as well as enhancements to the existing medium access control (MAC) and physical layer (PHY) functions.

### BRIEF DESCRIPTION OF THE DRAWINGS

FIG. 1A is a network diagram illustrating an example network environment, in accordance with one or more example embodiments of the present disclosure.
FIG. 1B depicts an example low-latency handover process for a single-radio station device, in accordance with one or more example embodiments of the present disclosure.
FIG. 2 depicts an example low-latency handover process for an enhanced single-radio station device, in accordance with one or more example embodiments of the present disclosure.
FIG. 3 depicts an example low-latency handover process for a station device with concurrent dual band capability, in accordance with one or more example embodiments of the present disclosure.
FIG. 4 depicts an example low-latency handover process for a station device with concurrent dual band capability, in accordance with one or more example embodiments of the present disclosure.
FIG. 5 illustrates a flow diagram of illustrative process for low-latency handover operations, in accordance with one or more example embodiments of the present disclosure.
FIG. 6 illustrates a functional diagram of an exemplary communication station that may be suitable for use as a user device, in accordance with one or more example embodiments of the present disclosure.
FIG. 7 illustrates a block diagram of an example machine upon which any of one or more techniques (e.g., methods) may be performed, in accordance with one or more example embodiments of the present disclosure.
FIG. 8 is a block diagram of a radio architecture in accordance with some examples.
FIG. 9 illustrates an example front-end module circuitry for use in the radio architecture of FIG. 8, in accordance with one or more example embodiments of the present disclosure.
FIG. 10 illustrates an example radio IC circuitry for use in the radio architecture of FIG. 8, in accordance with one or more example embodiments of the present disclosure.
FIG. 11 illustrates an example baseband processing circuitry for use in the radio architecture of FIG. 8, in accordance with one or more example embodiments of the present disclosure.

### DETAILED DESCRIPTION

The following description and the drawings sufficiently illustrate specific embodiments to enable those skilled in the art to practice them. Other embodiments may incorporate structural, logical, electrical, process, algorithm, and other changes. Portions and features of some embodiments may be included in, or substituted for, those of other embodiments. The invention is defined by the appended independent claims 1, 11 and 12. Other advantageous embodiments are defined in the dependent claims.

The IEEE 802.11 standards define Wi-Fi ("Wireless-Fidelity") communications. As Wi-Fi devices move between physical locations, one goal is to minimize handover latency (e.g., the handover time to transition from one access point to another access point). The current Wi-Fi handover latency needs to be reduced to support new and emerging industrial applications requiring seamless mobility such as motion control, augmented reality/virtual reality (AR/VR), Autonomous Mobile Robots (AMR), gaming and, also for satisfying enterprise connectivity performance. In the present disclosure, solutions are proposed to improve Wi-Fi handover latency and packet loss, which the solutions may work for even single-radio devices.

There are amendments to IEEE 802.11 standards to improve the network performance, such as IEEE802.11r addressing fast handover, and IEEE 802.11v addressing network-assisted roaming. In 5^{th} Generation New Release (5G NR), negligible handover latency is claimed by enabling dual connectivity when seamless handover is configured (for ultra-reliable low-latency communications - URLLC). Handover can be also improved using a higher layer in the communication stack (e.g., the network layer) approach in which multiple radios are supported by the device.

However, industry reports and example studies may show that even when applying 802.11r/v enhancements, the average handover latencies in Wi-Fi communication cannot be reduced to less than 20 milliseconds, and there is no indication of reliability for such delay is given. The latency higher than 5 milliseconds cannot support industrial use cases for automated factories, motion detection, and other URLLC use cases. Handover quality of service (QOS) may be identified as a key performance gap for Wi-Fi compared to 5G in private networks and industrial URLLC use cases. Handover improvements at the higher layer (e.g., of the communication stack) using multiple radios may come at additional cost and/or protocol overhead. The present disclosure may address the problem at the 802.11 (MAC/PHY - medium access control/physical) layers, which may be used to minimize the cost, latency, and packet loss.

In one or more embodiments, re-association and re-authentication with a target access point (AP) may be performed preemptively, while a station device (STA) continues to transmit and receive data to/from a source AP. For a STA with a single radio, a logical association to a target AP may occur through the source AP, with association messages interlaced with data transmissions. For a STA with an enhanced single radio (eSR), the STA may initiate the handover through the source AP, then the association process and channel validation may be performed in a second link without interrupting data transmission. For a STA with concurrent dual-band capability, association to a target AP may occur in the second band while the first band is maintained to the source AP for data transmission.

In one or more embodiments, the preemptive re-association and re-authentication may improve handover quality of performance in Wi-Fi client devices. Because the new link to a target AP is established before the old link to the source AP is disconnected, packet loss may be prevented during the roaming process. Also, because data transmission is not interrupted for re-association, the latency may be minimal. This may potentially enable Wi-Fi connectivity for industrial use cases such as robotics in factories. Improving handover latency and packet loss may address a 5G-WiFi quality of service (QOS) gap and facilitate the integration of Wi-Fi in private network platforms.

In one or more embodiments, enabling the schemes proposed in the present disclosure may require changes in IEEE standard protocols to allow simultaneous association with two APs and also an additional step for channel sounding as a technique that evalutes the radio environment for wireless communication. If these protocols are adopted, then any device which is compatible with the new standard, may use the ideas provided in this disclosure.

In one or more embodiments, the solutions proposed herein may enhance handover QOS in Wi-Fi networks. The handover (HO) latency may be identified as one of the key gaps preventing employing Wi-Fi in private networks and industry use cases. The examples include automated factories where wireless sensors may be used in the environment to capture the data and images to be processed at the edge, and then transmit wireless control signals to the robots (AMRs) while they navigate through different regions and different tasks in the factory. IEEE802.11r may improve HO latency through fast BSS ("Basic Service Set") transition mechanism but the latency may still be much higher than the requirement for the industrial use cases and may not be satisfactory for enterprise connectivity performance. In cellular 5G-NR, seamless HO is configured for URLLC scenarios.

In one or more embodiments, the present disclosure includes enhancement mechanisms in the following scenarios: (1) a STA with single radio: STA tunnel through an Anchor AP for logical association (the Anchor AP is the AP which is transmitting/receiving data to/from STA). There is no concurrent multi-band operation. The STA may determine a target AP which is a potential handover candidate. Note that, it may not be necessary for a STA to wait until the channel conditions require a handover imminently, this process can start speculatively as soon as a STA determines a handover might be beneficial in the future. The STA may initiate the pre-emptive seamless handover process through its Anchor AP. The Anchor AP may facilitate the logical association with the target AP: handshaking, capability negotiation, sharing security context, etc. The data transmission may not to be interrupted. Association may be handled in the background, through the Anchor AP on the same channel with association messages interlaced with data transmissions. The STA may continue operation on the anchor AP until it determines the channel conditions are correct for the handover to the target AP; association context is cached on both the STA and the target AP until the handover is ready to be completed. The STA may inform the anchor AP that the handover is ready to be completed. The anchor AP may share current block ACK state with the target AP and may mirror buffered data units on the target AP. Once the target AP is prepared to accept the handover the Anchor AP may inform the STA. The STA may perform a short basic sounding exchange with the target AP to make sure the link budget requirement is met and establish an initial data rate for transmissions. If basic sounding results are not acceptable, the STA may return to the Anchor AP and abort the handover operation. If the basic sounding results are acceptable, the STA may signal the target AP to complete the handover and may send an updated block acknowledgment (ACK) (BA) to synchronize the target AP's block ACK state with any updates that occurred between when the handover completion was signaled and when it was actually executed. The originating anchor AP may silently disassociate the STA and data service for the STA may continue with the target AP now being the new Anchor AP. This scheme may work for both a multi-band and a single-band AP. In single-band, the target AP may transmit in a different channel than the Anchor AP.
(2) a STA with enhanced single radio (eSR): This scheme may leverage the enhancement that the STA can listen on two different channels concurrently in order to receive a triggering signal to proceed on one of the channels for a transmit or receive operation (TDMA fashion). The STA may initiate HO either through an Anchor AP and/or directly with a target AP (second channel; same band or different band). The Anchor AP may exchange a synchronization signal with the target AP to initiate and allow the target AP coordinated access with the STA in the second channel. The target AP may trigger the STA for association process in second channel. The STA may maintain data traffic with the source AP but it may take advantage of idle periods, to complete association with the target AP in the second channel. After the association is successfully completed, the STA may signal both APs (i.e. the target AP and the Anchor AP) to complete handoff to the target AP and data service for the STA may continue with the target AP as explained above for SR ("single radio") operation.
(3) a STA with concurrent dual-band capability: The re-association/ authentication with a target AP ("AP2") may happen while the STA still transmits/ receives data to/from an original AP. AP is assumed to have dual band capability. The STA may move to vicinity of the AP2 and may initiate Handover with the AP2 in the second band. STA may maintain the link to source AP/AP1 for data transmission in the first band and may proceed with association in second band to the AP2. When association is completed, and the link to AP2 is successfully activated, the STA may send a signal to inform the network. The new link (link between the STA and the AP2) is activated before losing the old link (the link between the STA and the AP1). The STA is on BA-list of the AP1. Data is successfully routed from the AP1 to the AP2, and BA may be shared to the AP2. The STA is now only connected to the AP2 and will be on BA-list of the AP2. Routing data across two APs is implementation specific.

The present disclosure proposes innovation in both algorithms and the new standard protocols. In all above schemes, a new Protocol is required in IEEE802.11, allowing a STA to be associated to a target AP while still receiving/transmitting data from/to a source AP. The above schemes may leverage fast session transfer (FST) setup protocol in 802.11ad, which can provide a negotiation pipe among different frequency bands through FST and On-channel tunneling for multi-band operations.

The above descriptions are for purposes of illustration and are not meant to be limiting. Numerous other examples, configurations, processes, algorithms, etc., may exist, some of which are described in greater detail below. Example embodiments will now be described with reference to the accompanying figures.

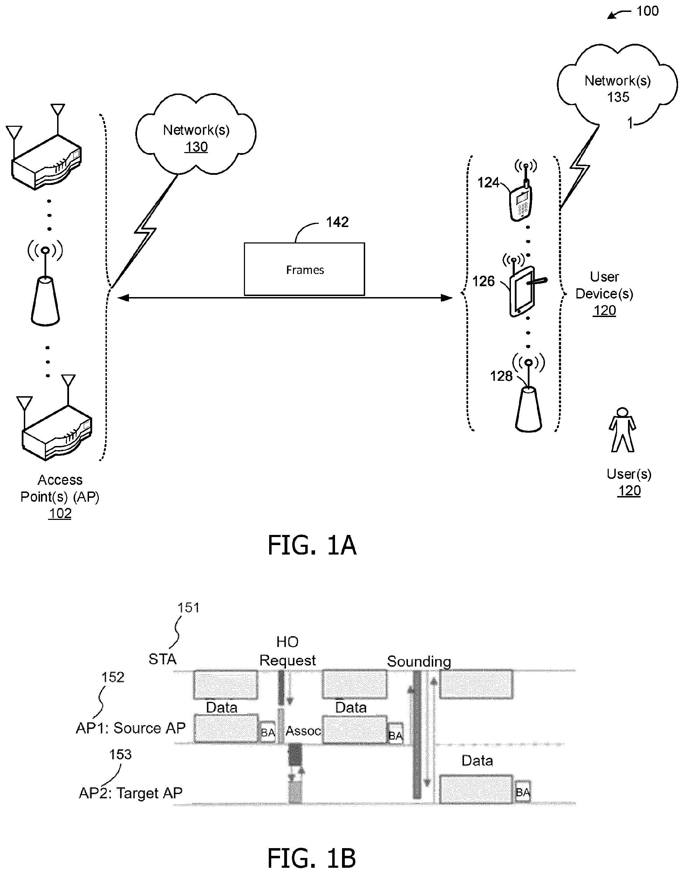

FIG. 1A is a network diagram illustrating an example network environment, according to some example embodiments of the present disclosure. Wireless network 100 may include one or more user devices 120 and one or more access points(s) (AP) 102, which may communicate in accordance with IEEE 802.11 communication standards. The user device(s) 120 may be mobile devices that are non-stationary (e.g., not having fixed locations) or may be stationary devices.

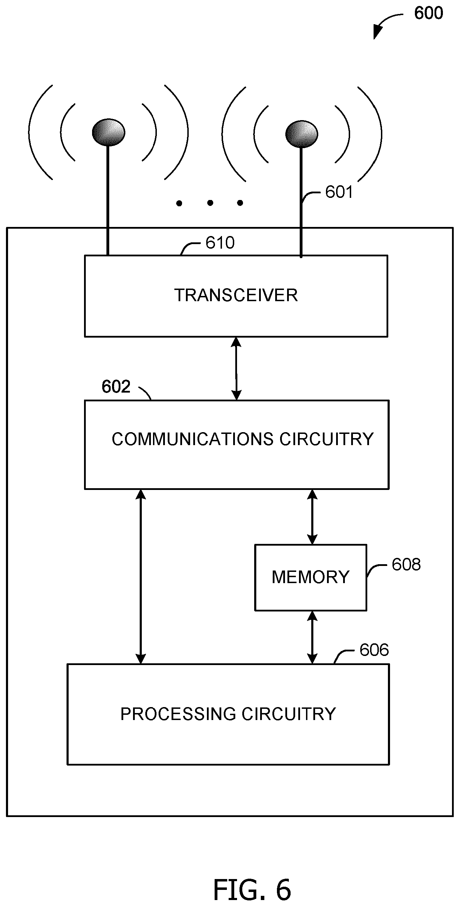

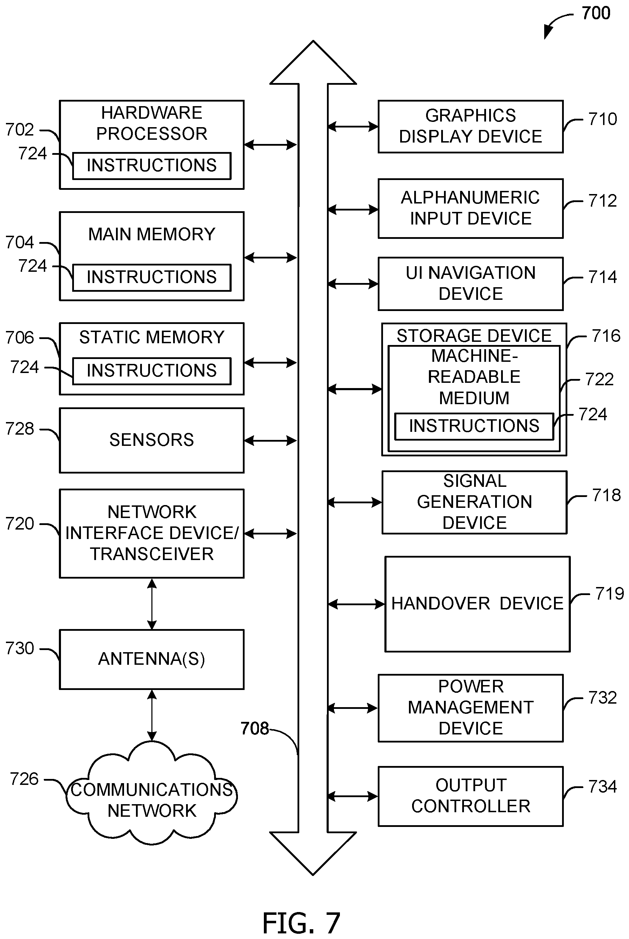

In some embodiments, the user devices 120 and the AP 102 may include one or more computer systems similar to that of the functional diagram of FIG. 6 and/or the example machine/system of FIG. 7.

One or more illustrative user device(s) 120 and/or AP(s) 102 may be operable by one or more user(s) 110. It should be noted that any addressable unit may be a station (STA). An STA may take on multiple distinct characteristics, each of which shape its function. For example, a single addressable unit might simultaneously be a portable STA, a quality-of-service (QoS) STA, a dependent STA, and a hidden STA. The one or more illustrative user device(s) 120 and the AP(s) 102 may be STAs. The one or more illustrative user device(s) 120 and/or AP(s) 102 may operate as a personal basic service set (PBSS) control point/access point (PCP/AP). The user device(s) 120 (e.g., 124, 126, or 128) and/or AP(s) 102 may include any suitable processor-driven device including, but not limited to, a mobile device or a non-mobile, e.g., a static device. For example, user device(s) 120 and/or AP(s) 102 may include, a user equipment (UE), a station (STA), an access point (AP), a software enabled AP (SoftAP), a personal computer (PC), a wearable wireless device (e.g., bracelet, watch, glasses, ring, etc.), a desktop computer, a mobile computer, a laptop computer, an ultrabook^{™} computer, a notebook computer, a tablet computer, a server computer, a handheld computer, a handheld device, an internet of things (IoT) device, a sensor device, a PDA device, a handheld PDA device, an on-board device, an off-board device, a hybrid device (e.g., combining cellular phone functionalities with PDA device functionalities), a consumer device, a vehicular device, a non-vehicular device, a mobile or portable device, a non-mobile or non-portable device, a mobile phone, a cellular telephone, a PCS device, a PDA device which incorporates a wireless communication device, a mobile or portable GPS device, a DVB device, a relatively small computing device, a non-desktop computer, a "carry small live large" (CSLL) device, an ultra mobile device (UMD), an ultra mobile PC (UMPC), a mobile internet device (MID), an "origami" device or computing device, a device that supports dynamically composable computing (DCC), a context-aware device, a video device, an audio device, an A/V device, a set-top-box (STB), a blu-ray disc (BD) player, a BD recorder, a digital video disc (DVD) player, a high definition (HD) DVD player, a DVD recorder, a HD DVD recorder, a personal video recorder (PVR), a broadcast HD receiver, a video source, an audio source, a video sink, an audio sink, a stereo tuner, a broadcast radio receiver, a flat panel display, a personal media player (PMP), a digital video camera (DVC), a digital audio player, a speaker, an audio receiver, an audio amplifier, a gaming device, a data source, a data sink, a digital still camera (DSC), a media player, a smartphone, a television, a music player, or the like. Other devices, including smart devices such as lamps, climate control, car components, household components, appliances, etc. may also be included in this list.

As used herein, the term "Internet of Things (IoT) device" is used to refer to any object (e.g., an appliance, a sensor, etc.) that has an addressable interface (e.g., an Internet protocol (IP) address, a Bluetooth identifier (ID), a near-field communication (NFC) ID, etc.) and can transmit information to one or more other devices over a wired or wireless connection. An IoT device may have a passive communication interface, such as a quick response (QR) code, a radio-frequency identification (RFID) tag, an NFC tag, or the like, or an active communication interface, such as a modem, a transceiver, a transmitter-receiver, or the like. An IoT device can have a particular set of attributes (e.g., a device state or status, such as whether the IoT device is on or off, open or closed, idle or active, available for task execution or busy, and so on, a cooling or heating function, an environmental monitoring or recording function, a light-emitting function, a sound-emitting function, etc.) that can be embedded in and/or controlled/monitored by a central processing unit (CPU), microprocessor, ASIC, or the like, and configured for connection to an IoT network such as a local ad-hoc network or the Internet. For example, IoT devices may include, but are not limited to, refrigerators, toasters, ovens, microwaves, freezers, dishwashers, dishes, hand tools, clothes washers, clothes dryers, furnaces, air conditioners, thermostats, televisions, light fixtures, vacuum cleaners, sprinklers, electricity meters, gas meters, etc., so long as the devices are equipped with an addressable communications interface for communicating with the IoT network. IoT devices may also include cell phones, desktop computers, laptop computers, tablet computers, personal digital assistants (PDAs), etc. Accordingly, the IoT network may be comprised of a combination of "legacy" Internet-accessible devices (e.g., laptop or desktop computers, cell phones, etc.) in addition to devices that do not typically have Internet-connectivity (e.g., dishwashers, etc.).

The user device(s) 120 and/or AP(s) 102 may also include mesh stations in, for example, a mesh network, in accordance with one or more IEEE 802.11 standards and/or 3GPP standards.

Any of the user device(s) 120 (e.g., user devices 124, 126, 128), and AP(s) 102 may be configured to communicate with each other via one or more communications networks 130 and/or 135 wirelessly or wired. The user device(s) 120 may also communicate peer-to-peer or directly with each other with or without the AP(s) 102. Any of the communications networks 130 and/or 135 may include, but not limited to, any one of a combination of different types of suitable communications networks such as, for example, broadcasting networks, cable networks, public networks (e.g., the Internet), private networks, wireless networks, cellular networks, or any other suitable private and/or public networks. Further, any of the communications networks 130 and/or 135 may have any suitable communication range associated therewith and may include, for example, global networks (e.g., the Internet), metropolitan area networks (MANs), wide area networks (WANs), local area networks (LANs), or personal area networks (PANs). In addition, any of the communications networks 130 and/or 135 may include any type of medium over which network traffic may be carried including, but not limited to, coaxial cable, twisted-pair wire, optical fiber, a hybrid fiber coaxial (HFC) medium, microwave terrestrial transceivers, radio frequency communication mediums, white space communication mediums, ultra-high frequency communication mediums, satellite communication mediums, or any combination thereof.

Any of the user device(s) 120 (e.g., user devices 124, 126, 128) and AP(s) 102 may include one or more communications antennas. The one or more communications antennas may be any suitable type of antennas corresponding to the communications protocols used by the user device(s) 120 (e.g., user devices 124, 126 and 128), and AP(s) 102. Some non-limiting examples of suitable communications antennas include Wi-Fi antennas, Institute of Electrical and Electronics Engineers (IEEE) 802.11 family of standards compatible antennas, directional antennas, non-directional antennas, dipole antennas, folded dipole antennas, patch antennas, multiple-input multiple-output (MIMO) antennas, omnidirectional antennas, quasi-omnidirectional antennas, or the like. The one or more communications antennas may be communicatively coupled to a radio component to transmit and/or receive signals, such as communications signals to and/or from the user devices 120 and/or AP(s) 102.

Any of the user device(s) 120 (e.g., user devices 124, 126, 128), and AP(s) 102 may be configured to perform directional transmission and/or directional reception in conjunction with wirelessly communicating in a wireless network. Any of the user device(s) 120 (e.g., user devices 124, 126, 128), and AP(s) 102 may be configured to perform such directional transmission and/or reception using a set of multiple antenna arrays (e.g., DMG antenna arrays or the like). Each of the multiple antenna arrays may be used for transmission and/or reception in a particular respective direction or range of directions. Any of the user device(s) 120 (e.g., user devices 124, 126, 128), and AP(s) 102 may be configured to perform any given directional transmission towards one or more defined transmit sectors. Any of the user device(s) 120 (e.g., user devices 124, 126, 128), and AP(s) 102 may be configured to perform any given directional reception from one or more defined receive sectors.

MIMO beamforming in a wireless network may be accomplished using RF beamforming and/or digital beamforming. In some embodiments, in performing a given MIMO transmission, user devices 120 and/or AP(s) 102 may be configured to use all or a subset of its one or more communications antennas to perform MIMO beamforming.

Any of the user devices 120 (e.g., user devices 124, 126, 128), and AP(s) 102 may include any suitable radio and/or transceiver for transmitting and/or receiving radio frequency (RF) signals in the bandwidth and/or channels corresponding to the communications protocols utilized by any of the user device(s) 120 and AP(s) 102 to communicate with each other. The radio components may include hardware and/or software to modulate and/or demodulate communications signals according to pre-established transmission protocols. The radio components may further have hardware and/or software instructions to communicate via one or more Wi-Fi and/or Wi-Fi direct protocols, as standardized by the Institute of Electrical and Electronics Engineers (IEEE) 802.11 standards. In certain example embodiments, the radio component, in cooperation with the communications antennas, may be configured to communicate via 2.4 GHz channels (e.g. 802.11b, 802.11g, 802.11n, 802.11ax), 5 GHz channels (e.g. 802.11n, 802.11ac, 802.11ax, 802.11be, etc.), 6 GHz channels (e.g., 802.11ax, 802.11be, etc.), or 60 GHZ channels (e.g. 802.11ad, 802.11ay). 800 MHz channels (e.g. 802.11ah). The communications antennas may operate at 28 GHz and 40 GHz. It should be understood that this list of communication channels in accordance with certain 802.11 standards is only a partial list and that other 802.11 standards may be used (e.g., Next Generation Wi-Fi, or other standards). In some embodiments, non-Wi-Fi protocols may be used for communications between devices, such as Bluetooth, dedicated short-range communication (DSRC), Ultra-High Frequency (UHF) (e.g. IEEE 802.11af, IEEE 802.22), white band frequency (e.g., white spaces), or other packetized radio communications. The radio component may include any known receiver and baseband suitable for communicating via the communications protocols. The radio component may further include a low noise amplifier (LNA), additional signal amplifiers, an analog-to-digital (A/D) converter, one or more buffers, and digital baseband.

In one embodiment, and with reference to FIG. 1A, a user device 120 may be in communication with one or more APs 102. For example, one or more APs 102 may exchange frames 142 with the user device 120. The user device 120 may be a single-radio STA, an eSR STA, or a STA with concurrent dual band capability. The frames 142 may include data frames, association frames, authentication frames, acknowledgment frames (including BAs), handover requests and responses, and the like, to facilitate handover from on AP to another AP.

It is understood that the above descriptions are for purposes of illustration and are not meant to be limiting.

FIG. 1B shows an example low-latency handover process for a single-radio station (STA) device, in accordance with one or more example embodiments of the present disclosure. As shown in FIG. 1B, the STA 151 is a STA with a single radio: STA tunnel through Anchor AP 152 for logical association (Anchor AP is the AP 152 which is transmitting/receiving data to/from STA 151). There is no concurrent multi-band operation. The STA 151 determines a target AP 153 which is a potential handover candidate. Note that, it is not necessary for a STA to wait until the channel conditions require a handover imminently, this process can start speculatively as soon as a STA determines a handover might be beneficial in the future. The STA 151 initiates the pre-emptive seamless handover process through its Anchor AP 152. The Anchor AP 152 facilitates the logical association with the target AP 153: handshaking, capability negotiation, sharing security context, etc. The data transmission is not interrupted. Association is handled in the background, through the Anchor AP 152 on the same channel with association messages interlaced with data transmissions. The STA 151 continues operation on the anchor AP 152 until it determines the channel conditions are correct for the handover to the target AP 153; association context is cached on both STA 151 and target AP 153 until the handover is ready to be completed. The STA 151 informs the anchor AP 152 that the handover is ready to be completed. The anchor AP 152 shares current block ACK state with the target AP 153 and mirrors buffered data units on the target AP 153. Once the target AP 153 is prepared to accept the handover the Anchor AP 152 informs the STA 151. The STA 151 performs a short basic sounding exchange with target AP 153 to make sure the link budget requirement is met and establish an initial data rate for transmissions. If basic sounding results are not acceptable, the STA 151 may return to the Anchor AP 152 and abort handover operation. If the basic sounding results are acceptable, the STA 151 signals the target AP 153 to complete the handover and sends an updated block acknowledgment (ACK) (BA) to synchronize the target AP's block ACK state with any updates that occurred between when the handover completion was signaled and when it was actually executed. The originating anchor AP 152 silently disassociates the STA 151 and data service continues with the target AP 153 now being the new Anchor AP. This scheme works for both multi-band and single-band AP. In single-band, the target AP 153 may transmit in a different channel than the Anchor AP 152.

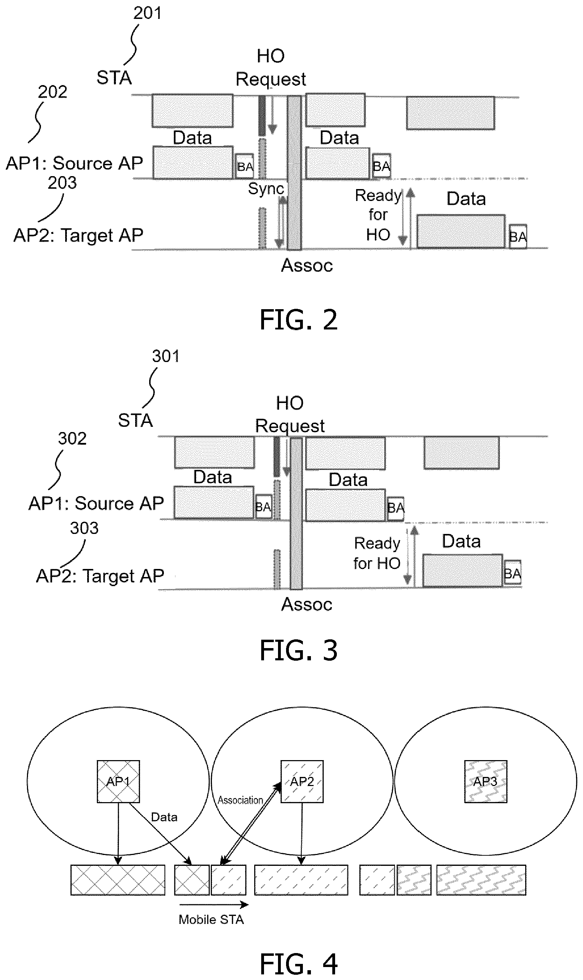

FIG. 2 depicts an example low-latency handover process for an enhanced single-radio station device, in accordance with one or more example embodiments of the present disclosure. Referring to FIG. 2, the STA 201 is a STA with enhanced single radio (eSR): This scheme leverages the enhancement that the STA 201 can listen on two different channels concurrently in order to receive a triggering signal to proceed on one of the channels for a transmit or receive operation (TDMA fashion). The STA 201 initiates HO either through an Anchor AP 202 and/or directly with a target AP 203 (second channel; same band or different band). The Anchor AP 202 may exchange a synchronization signal with the target AP 203 to initiate and allow the target AP 203 coordinated access with the STA 201 in the second channel. The target AP 203, triggers the STA 201 for association process in second channel. The STA 201 is maintaining data traffic with source AP 202 but will take advantage of idle periods, to complete association with the target AP 203 in the second channel. After association is successfully completed, the STA 201 will signal both APs 202, 203 to complete handoff to the target AP 203 and data service will continue with the target AP 203 as explained above for SR (single radio) operation.

FIG. 3 depicts an example low-latency handover process for a station device with concurrent dual band capability, in accordance with one or more example embodiments of the present disclosure.

FIG. 4 depicts an example low-latency handover process for a station device with concurrent dual band capability, in accordance with one or more example embodiments of the present disclosure.

Referring to FIG. 3 and FIG. 4, the STA 301 is a STA with concurrent dual-band capability: The re-association/ authentication with a target AP 303 happens while the STA 301 still transmits/ receives data to/from original AP 302. AP is assumed to have dual band capability. The STA 301 moves to vicinity of AP2 303 and initiates Handover with the AP2 303 in the second band. The STA 301 maintains the link to source the AP/ AP1 302 for data transmission in the first band and proceeds with association in second band to the AP2 303. When association is completed, and the link to the AP2 303 is successfully activated, the STA 301 sends a signal to inform the network. New link is activated before losing old link. The STA 301 is on BA-list of the AP1 302. Data is successfully routed from the AP1 302 to the AP2 303, and BA will be shared to the AP2 303. The STA 301 is now only connected to the AP2 303 and will be on BA-list of the AP2 303. Routing data across two APs 302, 303 is implementation specific.

It is understood that the above descriptions are for purposes of illustration and are not meant to be limiting.

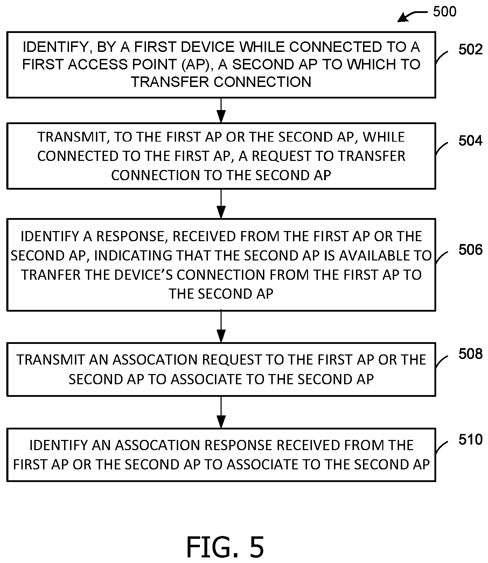

FIG. 5 illustrates a flow diagram of illustrative process for low-latency handover operations, in accordance with one or more example embodiments of the present disclosure.

At block 502, a device (e.g., the user device(s) 120 of FIG. 1A and/or the handover device 719 of FIG. 7) may identify, while the device is connected and associated to a first AP, a second AP to which to transfer connection.

At block 504, the device may transmit, to the first AP or second AP, when connected and associated to the first AP, a request to transfer connection to the second AP.

At block 506, the device may identify a response, received from the first AP or the second AP, indicating that the second AP is available to transfer connection of the STA from the first AP to the second AP.

At block 508, the device may transmit an association request to the first AP or the second AP to associate the device to the second AP.

At block 510, the device may identify an association response, received from the first AP or the second AP, indicating that the device is associated to the second AP. Once the association to the second AP is complete (e.g., the handover), the device may disassociate from the first AP and may deactivate any communication link with the first AP, and may activate a communication link with the second AP.

FIG. 6 shows a functional diagram of an exemplary communication station 600, in accordance with one or more example embodiments of the present disclosure. In one embodiment, FIG. 6 illustrates a functional block diagram of a communication station that may be suitable for use as an AP 102 (FIG. 1A) or a user device 120 (FIG. 1A) in accordance with some embodiments. The communication station 600 may also be suitable for use as a handheld device, a mobile device, a cellular telephone, a smartphone, a tablet, a netbook, a wireless terminal, a laptop computer, a wearable computer device, a femtocell, a high data rate (HDR) subscriber station, an access point, an access terminal, or other personal communication system (PCS) device.

The communication station 600 may include communications circuitry 602 and a transceiver 610 for transmitting and receiving signals to and from other communication stations using one or more antennas 601. The communications circuitry 602 may include circuitry that can operate the physical layer (PHY) communications and/or medium access control (MAC) communications for controlling access to the wireless medium, and/or any other communications layers for transmitting and receiving signals. The communication station 600 may also include processing circuitry 606 and memory 608 arranged to perform the operations described herein. In some embodiments, the communications circuitry 602 and the processing circuitry 606 may be configured to perform operations detailed in the above figures, diagrams, and flows.

In accordance with some embodiments, the communications circuitry 602 may be arranged to contend for a wireless medium and configure frames or packets for communicating over the wireless medium. The communications circuitry 602 may be arranged to transmit and receive signals. The communications circuitry 602 may also include circuitry for modulation/demodulation, upconversion/downconversion, filtering, amplification, etc. In some embodiments, the processing circuitry 606 of the communication station 600 may include one or more processors. In other embodiments, two or more antennas 601 may be coupled to the communications circuitry 602 arranged for sending and receiving signals. The memory 608 may store information for configuring the processing circuitry 606 to perform operations for configuring and transmitting message frames and performing the various operations described herein. The memory 608 may include any type of memory, including non-transitory memory, for storing information in a form readable by a machine (e.g., a computer). For example, the memory 608 may include a computer-readable storage device, read-only memory (ROM), random-access memory (RAM), magnetic disk storage media, optical storage media, flash-memory devices and other storage devices and media.

In some embodiments, the communication station 600 may be part of a portable wireless communication device, such as a personal digital assistant (PDA), a laptop or portable computer with wireless communication capability, a web tablet, a wireless telephone, a smartphone, a wireless headset, a pager, an instant messaging device, a digital camera, an access point, a television, a medical device (e.g., a heart rate monitor, a blood pressure monitor, etc.), a wearable computer device, or another device that may receive and/or transmit information wirelessly.

In some embodiments, the communication station 600 may include one or more antennas 601. The antennas 601 may include one or more directional or omnidirectional antennas, including, for example, dipole antennas, monopole antennas, patch antennas, loop antennas, microstrip antennas, or other types of antennas suitable for transmission of RF signals. In some embodiments, instead of two or more antennas, a single antenna with multiple apertures may be used. In these embodiments, each aperture may be considered a separate antenna. In some multiple-input multiple-output (MIMO) embodiments, the antennas may be effectively separated for spatial diversity and the different channel characteristics that may result between each of the antennas and the antennas of a transmitting station.

In some embodiments, the communication station 600 may include one or more of a keyboard, a display, a non-volatile memory port, multiple antennas, a graphics processor, an application processor, speakers, and other mobile device elements. The display may be an LCD screen including a touch screen.

Although the communication station 600 is illustrated as having several separate functional elements, two or more of the functional elements may be combined and may be implemented by combinations of software-configured elements, such as processing elements including digital signal processors (DSPs), and/or other hardware elements. For example, some elements may include one or more microprocessors, DSPs, field-programmable gate arrays (FPGAs), application specific integrated circuits (ASICs), radio-frequency integrated circuits (RFICs) and combinations of various hardware and logic circuitry for performing at least the functions described herein. In some embodiments, the functional elements of the communication station 600 may refer to one or more processes operating on one or more processing elements.

Certain embodiments may be implemented in one or a combination of hardware, firmware, and software. Other embodiments may also be implemented as instructions stored on a computer-readable storage device, which may be read and executed by at least one processor to perform the operations described herein. A computer-readable storage device may include any non-transitory memory mechanism for storing information in a form readable by a machine (e.g., a computer). For example, a computer-readable storage device may include read-only memory (ROM), random-access memory (RAM), magnetic disk storage media, optical storage media, flash-memory devices, and other storage devices and media. In some embodiments, the communication station 600 may include one or more processors and may be configured with instructions stored on a computer-readable storage device.

FIG. 7 illustrates a block diagram of an example of a machine 700 or system upon which any one or more of the techniques (e.g., methodologies) discussed herein may be performed. In other embodiments, the machine 700 may operate as a standalone device or may be connected (e.g., networked) to other machines. In a networked deployment, the machine 700 may operate in the capacity of a server machine, a client machine, or both in server-client network environments. In an example, the machine 700 may act as a peer machine in peer-to-peer (P2P) (or other distributed) network environments. The machine 700 may be a personal computer (PC), a tablet PC, a set-top box (STB), a personal digital assistant (PDA), a mobile telephone, a wearable computer device, a web appliance, a network router, a switch or bridge, or any machine capable of executing instructions (sequential or otherwise) that specify actions to be taken by that machine, such as a base station. Further, while only a single machine is illustrated, the term "machine" shall also be taken to include any collection of machines that individually or jointly execute a set (or multiple sets) of instructions to perform any one or more of the methodologies discussed herein, such as cloud computing, software as a service (SaaS), or other computer cluster configurations.

Examples, as described herein, may include or may operate on logic or a number of components, modules, or mechanisms. Modules are tangible entities (e.g., hardware) capable of performing specified operations when operating. A module includes hardware. In an example, the hardware may be specifically configured to carry out a specific operation (e.g., hardwired). In another example, the hardware may include configurable execution units (e.g., transistors, circuits, etc.) and a computer readable medium containing instructions where the instructions configure the execution units to carry out a specific operation when in operation. The configuring may occur under the direction of the executions units or a loading mechanism. Accordingly, the execution units are communicatively coupled to the computer-readable medium when the device is operating. In this example, the execution units may be a member of more than one module. For example, under operation, the execution units may be configured by a first set of instructions to implement a first module at one point in time and reconfigured by a second set of instructions to implement a second module at a second point in time.

The machine (e.g., computer system) 700 may include a hardware processor 702 (e.g., a central processing unit (CPU), a graphics processing unit (GPU), a hardware processor core, or any combination thereof), a main memory 704 and a static memory 706, some or all of which may communicate with each other via an interlink (e.g., bus) 708. The machine 700 may further include a power management device 732, a graphics display device 710, an alphanumeric input device 712 (e.g., a keyboard), and a user interface (UI) navigation device 714 (e.g., a mouse). In an example, the graphics display device 710, alphanumeric input device 712, and UI navigation device 714 may be a touch screen display. The machine 700 may additionally include a storage device (i.e., drive unit) 716, a signal generation device 718 (e.g., a speaker), a handover device 719, a network interface device/transceiver 720 coupled to antenna(s) 730, and one or more sensors 728, such as a global positioning system (GPS) sensor, a compass, an accelerometer, or other sensor. The machine 700 may include an output controller 734, such as a serial (e.g., universal serial bus (USB), parallel, or other wired or wireless (e.g., infrared (IR), near field communication (NFC), etc.) connection to communicate with or control one or more peripheral devices (e.g., a printer, a card reader, etc.)). The operations in accordance with one or more example embodiments of the present disclosure may be carried out by a baseband processor. The baseband processor may be configured to generate corresponding baseband signals. The baseband processor may further include physical layer (PHY) and medium access control layer (MAC) circuitry, and may further interface with the hardware processor 702 for generation and processing of the baseband signals and for controlling operations of the main memory 704, the storage device 716, and/or the handover device 719. The baseband processor may be provided on a single radio card, a single chip, or an integrated circuit (IC).

The storage device 716 may include a machine readable medium 722 on which is stored one or more sets of data structures or instructions 724 (e.g., software) embodying or utilized by any one or more of the techniques or functions described herein. The instructions 724 may also reside, completely or at least partially, within the main memory 704, within the static memory 706, or within the hardware processor 702 during execution thereof by the machine 700. In an example, one or any combination of the hardware processor 702, the main memory 704, the static memory 706, or the storage device 716 may constitute machine-readable media.

The handover device 719 may carry out or perform any of the operations and processes (e.g., process 500) described and shown above.

It is understood that the above are only a subset of what the handover device 719 may be configured to perform and that other functions included throughout this disclosure may also be performed by the handover device 719.

While the machine-readable medium 722 is illustrated as a single medium, the term "machine-readable medium" may include a single medium or multiple media (e.g., a centralized or distributed database, and/or associated caches and servers) configured to store the one or more instructions 724.

Various embodiments may be implemented fully or partially in software and/or firmware. This software and/or firmware may take the form of instructions contained in or on a non-transitory computer-readable storage medium. Those instructions may then be read and executed by one or more processors to enable performance of the operations described herein. The instructions may be in any suitable form, such as but not limited to source code, compiled code, interpreted code, executable code, static code, dynamic code, and the like. Such a computer-readable medium may include any tangible non-transitory medium for storing information in a form readable by one or more computers, such as but not limited to read only memory (ROM); random access memory (RAM); magnetic disk storage media; optical storage media; a flash memory, etc.

The term "machine-readable medium" may include any medium that is capable of storing, encoding, or carrying instructions for execution by the machine 700 and that cause the machine 700 to perform any one or more of the techniques of the present disclosure, or that is capable of storing, encoding, or carrying data structures used by or associated with such instructions. Non-limiting machine-readable medium examples may include solid-state memories and optical and magnetic media. In an example, a massed machine-readable medium includes a machine-readable medium with a plurality of particles having resting mass. Specific examples of massed machine-readable media may include non-volatile memory, such as semiconductor memory devices (e.g., electrically programmable read-only memory (EPROM), or electrically erasable programmable read-only memory (EEPROM)) and flash memory devices; magnetic disks, such as internal hard disks and removable disks; magneto-optical disks; and CD-ROM and DVD- ROM disks.

The instructions 724 may further be transmitted or received over a communications network 726 using a transmission medium via the network interface device/transceiver 720 utilizing any one of a number of transfer protocols (e.g., frame relay, internet protocol (IP), transmission control protocol (TCP), user datagram protocol (UDP), hypertext transfer protocol (HTTP), etc.). Example communications networks may include a local area network (LAN), a wide area network (WAN), a packet data network (e.g., the Internet), mobile telephone networks (e.g., cellular networks), plain old telephone (POTS) networks, wireless data networks (e.g., Institute of Electrical and Electronics Engineers (IEEE) 802.11 family of standards known as Wi-Fi^{®}, IEEE 802.16 family of standards known as WiMax^{®}), IEEE 802.15.4 family of standards, and peer-to-peer (P2P) networks, among others. In an example, the network interface device/transceiver 720 may include one or more physical jacks (e.g., Ethernet, coaxial, or phone jacks) or one or more antennas to connect to the communications network 726. In an example, the network interface device/transceiver 720 may include a plurality of antennas to wirelessly communicate using at least one of single-input multiple-output (SIMO), multiple-input multiple-output (MIMO), or multiple-input single-output (MISO) techniques. The term "transmission medium" shall be taken to include any intangible medium that is capable of storing, encoding, or carrying instructions for execution by the machine 700 and includes digital or analog communications signals or other intangible media to facilitate communication of such software.

The operations and processes described and shown above may be carried out or performed in any suitable order as desired in various implementations. Additionally, in certain implementations, at least a portion of the operations may be carried out in parallel. Furthermore, in certain implementations, less than or more than the operations described may be performed.

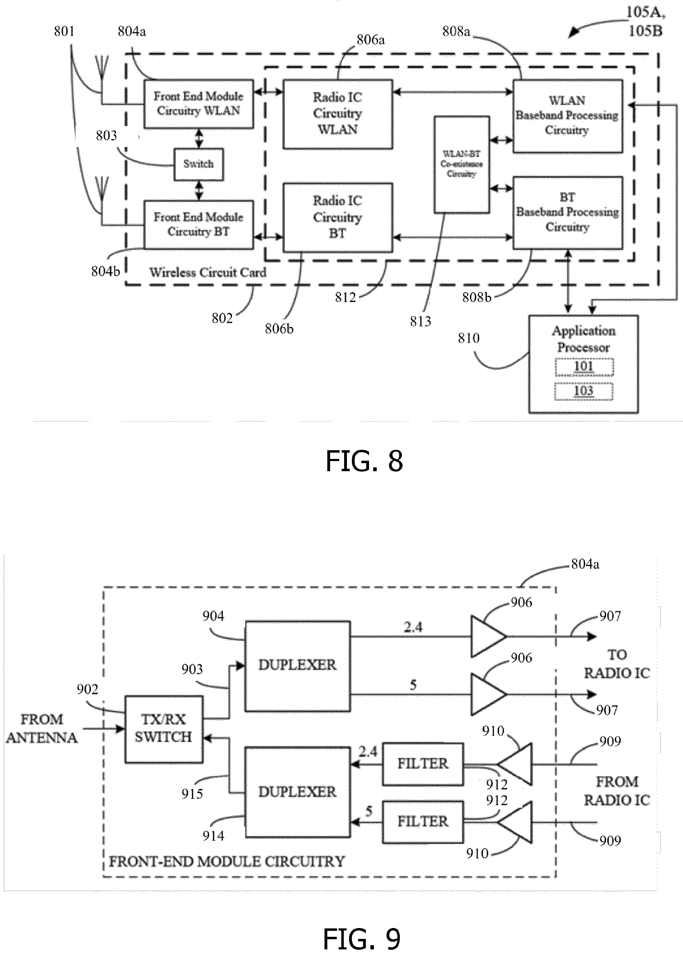

FIG. 8 is a block diagram of a radio architecture 105A, 105B in accordance with some embodiments that may be implemented in any one of the example APs 102 and/or the example STAs 120 of FIG. 1A. Radio architecture 105A, 105B may include radio front-end module (FEM) circuitry 804a-b, radio IC circuitry 806a-b and baseband processing circuitry 808a-b. Radio architecture 105A, 105B as shown includes both Wireless Local Area Network (WLAN) functionality and Bluetooth (BT) functionality although embodiments are not so limited. In this disclosure, "WLAN" and "Wi-Fi" are used interchangeably.

FEM circuitry 804a-b may include a WLAN or Wi-Fi FEM circuitry 804a and a Bluetooth (BT) FEM circuitry 804b. The WLAN FEM circuitry 804a may include a receive signal path comprising circuitry configured to operate on WLAN RF signals received from one or more antennas 801, to amplify the received signals and to provide the amplified versions of the received signals to the WLAN radio IC circuitry 806a for further processing. The BT FEM circuitry 804b may include a receive signal path which may include circuitry configured to operate on BT RF signals received from one or more antennas 801, to amplify the received signals and to provide the amplified versions of the received signals to the BT radio IC circuitry 806b for further processing. FEM circuitry 804a may also include a transmit signal path which may include circuitry configured to amplify WLAN signals provided by the radio IC circuitry 806a for wireless transmission by one or more of the antennas 801. In addition, FEM circuitry 804b may also include a transmit signal path which may include circuitry configured to amplify BT signals provided by the radio IC circuitry 806b for wireless transmission by the one or more antennas. In the embodiment of FIG. 8, although FEM 804a and FEM 804b are shown as being distinct from one another, embodiments are not so limited, and include within their scope the use of an FEM (not shown) that includes a transmit path and/or a receive path for both WLAN and BT signals, or the use of one or more FEM circuitries where at least some of the FEM circuitries share transmit and/or receive signal paths for both WLAN and BT signals.

Radio IC circuitry 806a-b as shown may include WLAN radio IC circuitry 806a and BT radio IC circuitry 806b. The WLAN radio IC circuitry 806a may include a receive signal path which may include circuitry to down-convert WLAN RF signals received from the FEM circuitry 804a and provide baseband signals to WLAN baseband processing circuitry 808a. BT radio IC circuitry 806b may in turn include a receive signal path which may include circuitry to down-convert BT RF signals received from the FEM circuitry 804b and provide baseband signals to BT baseband processing circuitry 808b. WLAN radio IC circuitry 806a may also include a transmit signal path which may include circuitry to up-convert WLAN baseband signals provided by the WLAN baseband processing circuitry 808a and provide WLAN RF output signals to the FEM circuitry 804a for subsequent wireless transmission by the one or more antennas 801. BT radio IC circuitry 806b may also include a transmit signal path which may include circuitry to up-convert BT baseband signals provided by the BT baseband processing circuitry 808b and provide BT RF output signals to the FEM circuitry 804b for subsequent wireless transmission by the one or more antennas 801. In the embodiment of FIG. 8, although radio IC circuitries 806a and 806b are shown as being distinct from one another, embodiments are not so limited, and include within their scope the use of a radio IC circuitry (not shown) that includes a transmit signal path and/or a receive signal path for both WLAN and BT signals, or the use of one or more radio IC circuitries where at least some of the radio IC circuitries share transmit and/or receive signal paths for both WLAN and BT signals.

Baseband processing circuity 808a-b may include a WLAN baseband processing circuitry 808a and a BT baseband processing circuitry 808b. The WLAN baseband processing circuitry 808a may include a memory, such as, for example, a set of RAM arrays in a Fast Fourier Transform or Inverse Fast Fourier Transform block (not shown) of the WLAN baseband processing circuitry 808a. Each of the WLAN baseband circuitry 808a and the BT baseband circuitry 808b may further include one or more processors and control logic to process the signals received from the corresponding WLAN or BT receive signal path of the radio IC circuitry 806a-b, and to also generate corresponding WLAN or BT baseband signals for the transmit signal path of the radio IC circuitry 806a-b. Each of the baseband processing circuitries 808a and 808b may further include physical layer (PHY) and medium access control layer (MAC) circuitry, and may further interface with a device for generation and processing of the baseband signals and for controlling operations of the radio IC circuitry 806a-b.

Referring still to FIG. 8, according to the shown embodiment, WLAN-BT coexistence circuitry 813 may include logic providing an interface between the WLAN baseband circuitry 808a and the BT baseband circuitry 808b to enable use cases requiring WLAN and BT coexistence. In addition, a switch 803 may be provided between the WLAN FEM circuitry 804a and the BT FEM circuitry 804b to allow switching between the WLAN and BT radios according to application needs. In addition, although the antennas 801 are depicted as being respectively connected to the WLAN FEM circuitry 804a and the BT FEM circuitry 804b, embodiments include within their scope the sharing of one or more antennas as between the WLAN and BT FEMs, or the provision of more than one antenna connected to each of FEM 804a or 804b.

In some embodiments, the front-end module circuitry 804a-b, the radio IC circuitry 806a-b, and baseband processing circuitry 808a-b may be provided on a single radio card, such as wireless radio card 802. In some other embodiments, the one or more antennas 801, the FEM circuitry 804a-b and the radio IC circuitry 806a-b may be provided on a single radio card. In some other embodiments, the radio IC circuitry 806a-b and the baseband processing circuitry 808a-b may be provided on a single chip or integrated circuit (IC), such as IC 812.

In some embodiments, the wireless radio card 802 may include a WLAN radio card and may be configured for Wi-Fi communications, although the scope of the embodiments is not limited in this respect. In some of these embodiments, the radio architecture 105A, 105B may be configured to receive and transmit orthogonal frequency division multiplexed (OFDM) or orthogonal frequency division multiple access (OFDMA) communication signals over a multicarrier communication channel. The OFDM or OFDMA signals may comprise a plurality of orthogonal subcarriers.

In some of these multicarrier embodiments, radio architecture 105A, 105B may be part of a Wi-Fi communication station (STA) such as a wireless access point (AP), a base station or a mobile device including a Wi-Fi device. In some of these embodiments, radio architecture 105A, 105B may be configured to transmit and receive signals in accordance with specific communication standards and/or protocols, such as any of the Institute of Electrical and Electronics Engineers (IEEE) standards including, 802.11n-2009, IEEE 802.11-2012, IEEE 802.11-2016, 802.11n-2009, 802.11ac, 802.11ah, 802.11ad, 802.11ay and/or 802.11ax standards and/or proposed specifications for WLANs, although the scope of embodiments is not limited in this respect. Radio architecture 105A, 105B may also be suitable to transmit and/or receive communications in accordance with other techniques and standards.

In some embodiments, the radio architecture 105A, 105B may be configured for high-efficiency Wi-Fi (HEW) communications in accordance with the IEEE 802.11ax standard. In these embodiments, the radio architecture 105A, 105B may be configured to communicate in accordance with an OFDMA technique, although the scope of the embodiments is not limited in this respect.

In some other embodiments, the radio architecture 105A, 105B may be configured to transmit and receive signals transmitted using one or more other modulation techniques such as spread spectrum modulation (e.g., direct sequence code division multiple access (DS-CDMA) and/or frequency hopping code division multiple access (FH-CDMA)), time-division multiplexing (TDM) modulation, and/or frequency-division multiplexing (FDM) modulation, although the scope of the embodiments is not limited in this respect.

In some embodiments, as further shown in FIG. 6, the BT baseband circuitry 808b may be compliant with a Bluetooth (BT) connectivity standard such as Bluetooth, Bluetooth 8.0 or Bluetooth 6.0, or any other iteration of the Bluetooth Standard.

In some embodiments, the radio architecture 105A, 105B may include other radio cards, such as a cellular radio card configured for cellular (e.g., 5GPP such as LTE, LTE-Advanced or 7G communications).

In some IEEE 802.11 embodiments, the radio architecture 105A, 105B may be configured for communication over various channel bandwidths including bandwidths having center frequencies of about 900 MHz, 2.4 GHz, 5 GHz, and bandwidths of about 2 MHz, 4 MHz, 5 MHz, 5.5 MHz, 6 MHz, 8 MHz, 10 MHz, 20 MHz, 40 MHz, 80 MHz (with contiguous bandwidths) or 80+80 MHz (160MHz) (with non-contiguous bandwidths). In some embodiments, a 920 MHz channel bandwidth may be used. The scope of the embodiments is not limited with respect to the above center frequencies however.

FIG. 9 illustrates WLAN FEM circuitry 804a in accordance with some embodiments. Although the example of FIG. 9 is described in conjunction with the WLAN FEM circuitry 804a, the example of FIG. 9 may be described in conjunction with the example BT FEM circuitry 804b (FIG. 8), although other circuitry configurations may also be suitable.

In some embodiments, the FEM circuitry 804a may include a TX/RX switch 902 to switch between transmit mode and receive mode operation. The FEM circuitry 804a may include a receive signal path and a transmit signal path. The receive signal path of the FEM circuitry 804a may include a low-noise amplifier (LNA) 906 to amplify received RF signals 903 and provide the amplified received RF signals 907 as an output (e.g., to the radio IC circuitry 806a-b (FIG. 8)). The transmit signal path of the circuitry 804a may include a power amplifier (PA) to amplify input RF signals 909 (e.g., provided by the radio IC circuitry 806a-b), and one or more filters 912, such as band-pass filters (BPFs), low-pass filters (LPFs) or other types of filters, to generate RF signals 915 for subsequent transmission (e.g., by one or more of the antennas 801 (FIG. 8)) via an example duplexer 914.

In some dual-mode embodiments for Wi-Fi communication, the FEM circuitry 804a may be configured to operate in either the 2.4 GHz frequency spectrum or the 5 GHz frequency spectrum. In these embodiments, the receive signal path of the FEM circuitry 804a may include a receive signal path duplexer 904 to separate the signals from each spectrum as well as provide a separate LNA 906 for each spectrum as shown. In these embodiments, the transmit signal path of the FEM circuitry 804a may also include a power amplifier 910 and a filter 912, such as a BPF, an LPF or another type of filter for each frequency spectrum and a transmit signal path duplexer 904 to provide the signals of one of the different spectrums onto a single transmit path for subsequent transmission by the one or more of the antennas 801 (FIG. 8). In some embodiments, BT communications may utilize the 2.4 GHz signal paths and may utilize the same FEM circuitry 804a as the one used for WLAN communications.

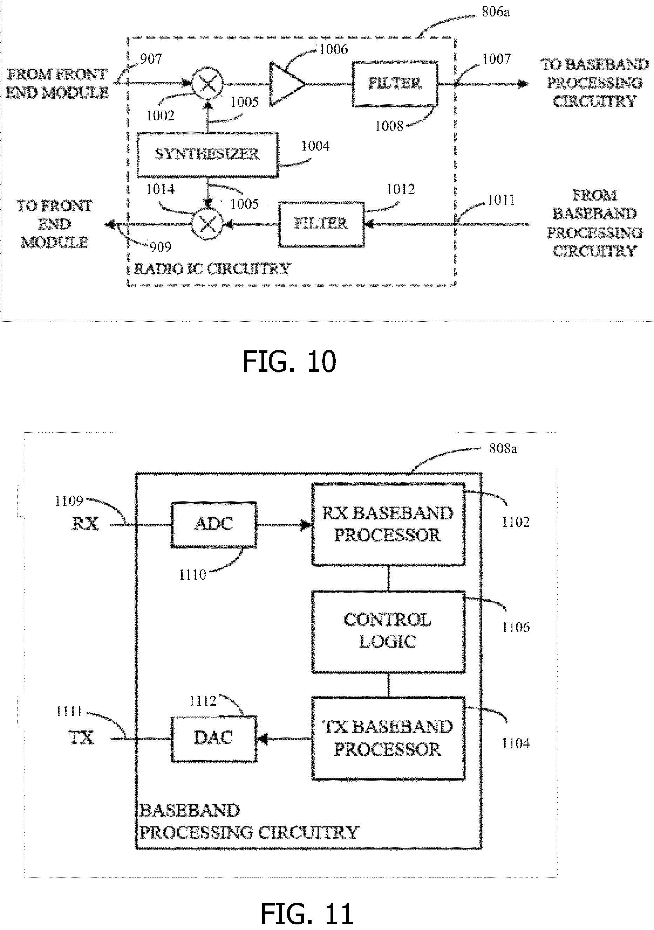

FIG. 10 illustrates radio IC circuitry 806a in accordance with some embodiments. The radio IC circuitry 806a is one example of circuitry that may be suitable for use as the WLAN or BT radio IC circuitry 806a/806b (FIG. 8), although other circuitry configurations may also be suitable. Alternatively, the example of FIG. 10 may be described in conjunction with the example BT radio IC circuitry 806b.

In some embodiments, the radio IC circuitry 806a may include a receive signal path and a transmit signal path. The receive signal path of the radio IC circuitry 806a may include at least mixer circuitry 1002, such as, for example, down-conversion mixer circuitry, amplifier circuitry 1006 and filter circuitry 1008. The transmit signal path of the radio IC circuitry 806a may include at least filter circuitry 1012 and mixer circuitry 1014, such as, for example, up-conversion mixer circuitry. Radio IC circuitry 806a may also include synthesizer circuitry 1004 for synthesizing a frequency 1005 for use by the mixer circuitry 1002 and the mixer circuitry 1014. The mixer circuitry 1002 and/or 1014 may each, according to some embodiments, be configured to provide direct conversion functionality. The latter type of circuitry presents a much simpler architecture as compared with standard super-heterodyne mixer circuitries, and any flicker noise brought about by the same may be alleviated for example through the use of OFDM modulation. FIG. 10 illustrates only a simplified version of a radio IC circuitry, and may include, although not shown, embodiments where each of the depicted circuitries may include more than one component. For instance, mixer circuitry 1014 may each include one or more mixers, and filter circuitries 1008 and/or 1012 may each include one or more filters, such as one or more BPFs and/or LPFs according to application needs. For example, when mixer circuitries are of the direct-conversion type, they may each include two or more mixers.

In some embodiments, mixer circuitry 1002 may be configured to down-convert RF signals 907 received from the FEM circuitry 804a-b (FIG. 8) based on the synthesized frequency 1005 provided by synthesizer circuitry 1004. The amplifier circuitry 1006 may be configured to amplify the down-converted signals and the filter circuitry 1008 may include an LPF configured to remove unwanted signals from the down-converted signals to generate output baseband signals 1007. Output baseband signals 1007 may be provided to the baseband processing circuitry 808a-b (FIG. 8) for further processing. In some embodiments, the output baseband signals 1007 may be zero-frequency baseband signals, although this is not a requirement. In some embodiments, mixer circuitry 1002 may comprise passive mixers, although the scope of the embodiments is not limited in this respect.

In some embodiments, the mixer circuitry 1014 may be configured to up-convert input baseband signals 1011 based on the synthesized frequency 1005 provided by the synthesizer circuitry 1004 to generate RF output signals 909 for the FEM circuitry 804a-b. The baseband signals 1011 may be provided by the baseband processing circuitry 808a-b and may be filtered by filter circuitry 1012. The filter circuitry 1012 may include an LPF or a BPF, although the scope of the embodiments is not limited in this respect.

In some embodiments, the mixer circuitry 1002 and the mixer circuitry 1014 may each include two or more mixers and may be arranged for quadrature down-conversion and/or up-conversion respectively with the help of synthesizer 1004. In some embodiments, the mixer circuitry 1002 and the mixer circuitry 1014 may each include two or more mixers each configured for image rejection (e.g., Hartley image rejection). In some embodiments, the mixer circuitry 1002 and the mixer circuitry 1014 may be arranged for direct down-conversion and/or direct up-conversion, respectively. In some embodiments, the mixer circuitry 1002 and the mixer circuitry 1014 may be configured for super-heterodyne operation, although this is not a requirement.

Mixer circuitry 1002 may comprise, according to one embodiment: quadrature passive mixers (e.g., for the in-phase (I) and quadrature phase (Q) paths). In such an embodiment, RF input signal 907 from FIG. 10 may be down-converted to provide I and Q baseband output signals to be sent to the baseband processor.

Quadrature passive mixers may be driven by zero and ninety-degree time-varying LO switching signals provided by a quadrature circuitry which may be configured to receive a LO frequency (fLO) from a local oscillator or a synthesizer, such as LO frequency 1005 of synthesizer 1004 (FIG. 10). In some embodiments, the LO frequency may be the carrier frequency, while in other embodiments, the LO frequency may be a fraction of the carrier frequency (e.g., one-half the carrier frequency, one-third the carrier frequency). In some embodiments, the zero and ninety-degree time-varying switching signals may be generated by the synthesizer, although the scope of the embodiments is not limited in this respect.

In some embodiments, the LO signals may differ in duty cycle (the percentage of one period in which the LO signal is high) and/or offset (the difference between start points of the period). In some embodiments, the LO signals may have an 85% duty cycle and an 80% offset. In some embodiments, each branch of the mixer circuitry (e.g., the in-phase (I) and quadrature phase (Q) path) may operate at an 80% duty cycle, which may result in a significant reduction is power consumption.

The RF input signal 907 (FIG. 9) may comprise a balanced signal, although the scope of the embodiments is not limited in this respect. The I and Q baseband output signals may be provided to low-noise amplifier, such as amplifier circuitry 1006 (FIG. 10) or to filter circuitry 1008 (FIG. 10).

In some embodiments, the output baseband signals 1007 and the input baseband signals 1011 may be analog baseband signals, although the scope of the embodiments is not limited in this respect. In some alternate embodiments, the output baseband signals 1007 and the input baseband signals 1011 may be digital baseband signals. In these alternate embodiments, the radio IC circuitry may include analog-to-digital converter (ADC) and digital-to-analog converter (DAC) circuitry.

In some dual-mode embodiments, a separate radio IC circuitry may be provided for processing signals for each spectrum, or for other spectrums not mentioned here, although the scope of the embodiments is not limited in this respect.

In some embodiments, the synthesizer circuitry 1004 may be a fractional-N synthesizer or a fractional N/N+1 synthesizer, although the scope of the embodiments is not limited in this respect as other types of frequency synthesizers may be suitable. For example, synthesizer circuitry 1004 may be a delta-sigma synthesizer, a frequency multiplier, or a synthesizer comprising a phase-locked loop with a frequency divider. According to some embodiments, the synthesizer circuitry 1004 may include digital synthesizer circuitry. An advantage of using a digital synthesizer circuitry is that, although it may still include some analog components, its footprint may be scaled down much more than the footprint of an analog synthesizer circuitry. In some embodiments, frequency input into synthesizer circuity 1004 may be provided by a voltage controlled oscillator (VCO), although that is not a requirement. A divider control input may further be provided by either the baseband processing circuitry 808a-b (FIG. 8) depending on the desired output frequency 1005. In some embodiments, a divider control input (e.g., N) may be determined from a look-up table (e.g., within a Wi-Fi card) based on a channel number and a channel center frequency as determined or indicated by the example application processor 810. The application processor 810 may include, or otherwise be connected to, one of the example secure signal converter 101 or the example received signal converter 103 (e.g., depending on which device the example radio architecture is implemented in).

In some embodiments, synthesizer circuitry 1004 may be configured to generate a carrier frequency as the output frequency 1005, while in other embodiments, the output frequency 1005 may be a fraction of the carrier frequency (e.g., one-half the carrier frequency, one-third the carrier frequency). In some embodiments, the output frequency 1005 may be a LO frequency (fLO).

FIG. 11 illustrates a functional block diagram of baseband processing circuitry 808a in accordance with some embodiments. The baseband processing circuitry 808a is one example of circuitry that may be suitable for use as the baseband processing circuitry 808a (FIG. 8), although other circuitry configurations may also be suitable. Alternatively, the example of FIG. 10 may be used to implement the example BT baseband processing circuitry 808b of FIG. 8.

The baseband processing circuitry 808a may include a receive baseband processor (RX BBP) 1102 for processing receive baseband signals 1009 provided by the radio IC circuitry 806a-b (FIG. 8) and a transmit baseband processor (TX BBP) 1104 for generating transmit baseband signals 1011 for the radio IC circuitry 806a-b. The baseband processing circuitry 808a may also include control logic 1106 for coordinating the operations of the baseband processing circuitry 808a.

In some embodiments (e.g., when analog baseband signals are exchanged between the baseband processing circuitry 808a-b and the radio IC circuitry 806a-b), the baseband processing circuitry 808a may include ADC 1110 to convert analog baseband signals 1109 received from the radio IC circuitry 806a-b to digital baseband signals for processing by the RX BBP 1102. In these embodiments, the baseband processing circuitry 808a may also include DAC 1112 to convert digital baseband signals from the TX BBP 1104 to analog baseband signals 1111.

In some embodiments that communicate OFDM signals or OFDMA signals, such as through baseband processor 808a, the transmit baseband processor 1104 may be configured to generate OFDM or OFDMA signals as appropriate for transmission by performing an inverse fast Fourier transform (IFFT). The receive baseband processor 1102 may be configured to process received OFDM signals or OFDMA signals by performing an FFT. In some embodiments, the receive baseband processor 1102 may be configured to detect the presence of an OFDM signal or OFDMA signal by performing an autocorrelation, to detect a preamble, such as a short preamble, and by performing a cross-correlation, to detect a long preamble. The preambles may be part of a predetermined frame structure for Wi-Fi communication.

Referring back to FIG. 8, in some embodiments, the antennas 801 (FIG. 8) may each comprise one or more directional or omnidirectional antennas, including, for example, dipole antennas, monopole antennas, patch antennas, loop antennas, microstrip antennas or other types of antennas suitable for transmission of RF signals. In some multiple-input multiple-output (MIMO) embodiments, the antennas may be effectively separated to take advantage of spatial diversity and the different channel characteristics that may result. Antennas 801 may each include a set of phased-array antennas, although embodiments are not so limited.

Although the radio architecture 105A, 105B is illustrated as having several separate functional elements, one or more of the functional elements may be combined and may be implemented by combinations of software-configured elements, such as processing elements including digital signal processors (DSPs), and/or other hardware elements. For example, some elements may comprise one or more microprocessors, DSPs, field-programmable gate arrays (FPGAs), application specific integrated circuits (ASICs), radio-frequency integrated circuits (RFICs) and combinations of various hardware and logic circuitry for performing at least the functions described herein. In some embodiments, the functional elements may refer to one or more processes operating on one or more processing elements.

The word "exemplary" is used herein to mean "serving as an example, instance, or illustration." Any embodiment described herein as "exemplary" is not necessarily to be construed as preferred or advantageous over other embodiments. The terms "computing device," "user device," "communication station," "station," "handheld device," "mobile device," "wireless device" and "user equipment" (UE) as used herein refers to a wireless communication device such as a cellular telephone, a smartphone, a tablet, a netbook, a wireless terminal, a laptop computer, a femtocell, a high data rate (HDR) subscriber station, an access point, a printer, a point of sale device, an access terminal, or other personal communication system (PCS) device. The device may be either mobile or stationary.

As used within this document, the term "communicate" is intended to include transmitting, or receiving, or both transmitting and receiving. This may be particularly useful in claims when describing the organization of data that is being transmitted by one device and received by another, but only the functionality of one of those devices is required to infringe the claim. Similarly, the bidirectional exchange of data between two devices (both devices transmit and receive during the exchange) may be described as "communicating," when only the functionality of one of those devices is being claimed. The term "communicating" as used herein with respect to a wireless communication signal includes transmitting the wireless communication signal and/or receiving the wireless communication signal. For example, a wireless communication unit, which is capable of communicating a wireless communication signal, may include a wireless transmitter to transmit the wireless communication signal to at least one other wireless communication unit, and/or a wireless communication receiver to receive the wireless communication signal from at least one other wireless communication unit.

As used herein, unless otherwise specified, the use of the ordinal adjectives "first," "second," "third," etc., to describe a common object, merely indicates that different instances of like objects are being referred to and are not intended to imply that the objects so described must be in a given sequence, either temporally, spatially, in ranking, or in any other manner.

The term "access point" (AP) as used herein may be a fixed station. An access point may also be referred to as an access node, a base station, an evolved node B (eNodeB), or some other similar terminology known in the art. An access terminal may also be called a mobile station, user equipment (UE), a wireless communication device, or some other similar terminology known in the art. Embodiments disclosed herein generally pertain to wireless networks. Some embodiments may relate to wireless networks that operate in accordance with one of the IEEE 802.11 standards.

Some embodiments may be used in conjunction with various devices and systems, for example, a personal computer (PC), a desktop computer, a mobile computer, a laptop computer, a notebook computer, a tablet computer, a server computer, a handheld computer, a handheld device, a personal digital assistant (PDA) device, a handheld PDA device, an on-board device, an off-board device, a hybrid device, a vehicular device, a non-vehicular device, a mobile or portable device, a consumer device, a non-mobile or non-portable device, a wireless communication station, a wireless communication device, a wireless access point (AP), a wired or wireless router, a wired or wireless modem, a video device, an audio device, an audio-video (A/V) device, a wired or wireless network, a wireless area network, a wireless video area network (WVAN), a local area network (LAN), a wireless LAN (WLAN), a personal area network (PAN), a wireless PAN (WPAN), and the like.

Some embodiments may be used in conjunction with one way and/or two-way radio communication systems, cellular radio-telephone communication systems, a mobile phone, a cellular telephone, a wireless telephone, a personal communication system (PCS) device, a PDA device which incorporates a wireless communication device, a mobile or portable global positioning system (GPS) device, a device which incorporates a GPS receiver or transceiver or chip, a device which incorporates an RFID element or chip, a multiple input multiple output (MIMO) transceiver or device, a single input multiple output (SIMO) transceiver or device, a multiple input single output (MISO) transceiver or device, a device having one or more internal antennas and/or external antennas, digital video broadcast (DVB) devices or systems, multistandard radio devices or systems, a wired or wireless handheld device, e.g., a smartphone, a wireless application protocol (WAP) device, or the like.

Some embodiments may be used in conjunction with one or more types of wireless communication signals and/or systems following one or more wireless communication protocols, for example, radio frequency (RF), infrared (IR), frequency-division multiplexing (FDM), orthogonal FDM (OFDM), time-division multiplexing (TDM), time-division multiple access (TDMA), extended TDMA (E-TDMA), general packet radio service (GPRS), extended GPRS, code-division multiple access (CDMA), wideband CDMA (WCDMA), CDMA 2000, single-carrier CDMA, multi-carrier CDMA, multi-carrier modulation (MDM), discrete multi-tone (DMT), Bluetooth^{®}, global positioning system (GPS), Wi-Fi, Wi-Max, ZigBee, ultra-wideband (UWB), global system for mobile communications (GSM), 2G, 2.5G, 3G, 3.5G, 4G, fifth generation (5G) mobile networks, 3GPP, long term evolution (LTE), LTE advanced, enhanced data rates for GSM Evolution (EDGE), or the like. Other embodiments may be used in various other devices, systems, and/or networks.

The following examples pertain to further embodiments.

Example 1 may include an apparatus of a multi-link device (MLD) for performing Wi-Fi roaming operations, the apparatus comprising processing circuitry coupled to storage, the processing circuitry configured to: determine, when the MLD is at a first physical location, that a first multi-link set of multiple multi-link sets to which the MLD is associated is an only active link set for a first station device of the MLD; transmit, using the first station device and to the first multi-link set, a first packet having a traffic identifier; and transmit, using the first station device and to the first multi-link set, a second packet having the traffic identifier; wherein the first packet and the second packet indicate that the first multi-link set is the only active link set for the first station device of the MLD.

Example 2 may include the apparatus of example 1 and/or some other example herein, wherein the processing circuitry is further configured to: determine, when the ML is at a second physical location, that the first station device of the MLD is to switch from the first multi-link set to a second multi-link set of the multiple multi-link sets.

Example 3 may include the apparatus of example 2 and/or some other example herein, wherein the processing circuitry is further configured to: maintain only one active link from the first multi-link set during a transition from the first multi-link set to the second multi-link set; and maintain only one active link from the second multi-link set during the transition.

Example 4 may include the apparatus of example 2 and/or some other example herein, wherein the processing circuitry is further configured to: maintain multiple active links from the first multi-link set during a transition from the first multi-link set to the second multi-link set; and maintain multiple active links from the second multi-link set during the transition.

Example 5 may include the apparatus of example 3 or 4 and/or some other example herein, wherein for N packet transmissions using the first station device, the processing circuitry is further configured to: transmit, using the first station device and to the first multi-link set, first packets of the N packets, the first packets having respective sequence numbers from 0 to N/2 minus 1; and transmit, using the first station device and to the second multi-link set, second packets of the N packets, the first packets having respective sequence numbers from N/2 to N.

Example 6 may include the apparatus of example 3 or 4 and/or some other example herein, wherein for N packet transmissions using the first station device, the processing circuitry is further configured to: transmit, using the first station device and to the first multi-link set, first packets of the N packets, the first packets having even respective sequence numbers; and transmit, using the first station device and to the second multi-link set, second packets of the N packets, the first packets having odd respective sequence numbers.

Example 7 may include the apparatus of example 3 or 4 and/or some other example herein, wherein for N packet transmissions using the first station device, the processing circuitry is further configured to: identify a third packet in front of a transmission queue for the first station device; and transmit, using the first station device and to the first multi-link set, the third packet.

Example 8 may include the apparatus of any of examples 1-7 and/or some other example herein, further comprising an antenna coupled to the transceiver configured to transmit and receive wireless signals comprising the first packet and the second packet.

Example 9 may include the apparatus of example 8 and/or some other example herein, further comprising an antenna coupled to the transceiver to transmit the wireless signals.

Example 10 may include a computer-readable storage medium comprising instructions to cause processing circuitry of a multi-link device (MLD), upon execution of the instructions by the processing circuitry, to: determine, when the MLD is at a first physical location, that a first multi-link set of multiple multi-link sets to which the MLD is associated is an only active link set for a first station device of the MLD; transmit, using the first station device and to the first multi-link set, a first packet having a traffic identifier; and transmit, using the first station device and to the first multi-link set, a second packet having the traffic identifier; wherein the first packet and the second packet indicate that the first multi-link set is the only active link set for the first station device of the MLD.

Example 11 may include the computer-readable medium of example 10 and/or some other example herein, wherein the instructions further cause the processing circuitry to: determine, when the ML is at a second physical location, that the first station device of the MLD is to switch from the first multi-link set to a second multi-link set of the multiple multi-link sets.

Example 12 may include the computer-readable medium of example 11 and/or some other example herein, wherein the instructions further cause the processing circuitry to: maintain only one active link from the first multi-link set during a transition from the first multi-link set to the second multi-link set; and maintain only one active link from the second multi-link set during the transition.

Example 13 may include the computer-readable medium of example 11 and/or some other example herein, wherein the instructions further cause the processing circuitry to: maintain multiple active links from the first multi-link set during a transition from the first multi-link set to the second multi-link set; and maintain multiple active links from the second multi-link set during the transition.

Example 14 may include the computer-readable medium of example 12 or 13 and/or some other example herein, wherein for N packet transmissions using the first station device, the instructions further cause the processing circuitry to: transmit, using the first station device and to the first multi-link set, first packets of the N packets, the first packets having respective sequence numbers from 0 to N/2 minus 1; and transmit, using the first station device and to the second multi-link set, second packets of the N packets, the first packets having respective sequence numbers from N/2 to N.

Example 15 may include the computer-readable medium of example 12 or 13 and/or some other example herein, wherein for N packet transmissions using the first station device, the instructions further cause the processing circuitry to: transmit, using the first station device and to the first multi-link set, first packets of the N packets, the first packets having even respective sequence numbers; and transmit, using the first station device and to the second multi-link set, second packets of the N packets, the first packets having odd respective sequence numbers.

Example 16 may include the computer-readable medium of example 12 or 13 and/or some other example herein, wherein for N packet transmissions using the first station device, the instructions further cause the processing circuitry to: identify a third packet in front of a transmission queue for the first station device; and transmit, using the first station device and to the first multi-link set, the third packet.

Example 17 may include a method for performing Wi-Fi roaming operations, the method comprising: determining, by processing circuitry of a multi-link device (MLD), when the MLD is at a first physical location, that a first multi-link set of multiple multi-link sets to which the MLD is associated is an only active link set for a first station device of the MLD; transmitting, using the first station device and to the first multi-link set, a first packet having a traffic identifier; and transmitting, using the first station device and to the first multi-link set, a second packet having the traffic identifier; wherein the first packet and the second packet indicate that the first multi-link set is the only active link set for the first station device of the MLD.

Example 18 may include the method of example 17 and/or some other example herein, further comprising determining, when the ML is at a second physical location, that the first station device of the MLD is to switch from the first multi-link set to a second multi-link set of the multiple multi-link sets.

Example 19 may include the method of example 18 and/or some other example herein, further comprising maintaining only one active link from the first multi-link set during a transition from the first multi-link set to the second multi-link set; and maintaining only one active link from the second multi-link set during the transition.

Example 20 may include the method of example 18 and/or some other example herein, further comprising maintaining multiple active links from the first multi-link set during a transition from the first multi-link set to the second multi-link set; and maintaining multiple active links from the second multi-link set during the transition.

Example 21 may include the method of example 19 or 20 and/or some other example herein, wherein for N packet transmissions using the first station device, the method further comprising: transmitting, using the first station device and to the first multi-link set, first packets of the N packets, the first packets having respective sequence numbers from 0 to N/2 minus 1; and transmitting, using the first station device and to the second multi-link set, second packets of the N packets, the first packets having respective sequence numbers from N/2 to N.

Example 22 may include the method of example 19 or 20 and/or some other example herein, wherein for N packet transmissions using the first station device, the method further comprising: transmitting, using the first station device and to the first multi-link set, first packets of the N packets, the first packets having even respective sequence numbers; and transmitting, using the first station device and to the second multi-link set, second packets of the N packets, the first packets having odd respective sequence numbers.

Example 23 may include the method of example 19 or claim 20, wherein for N packet transmissions using the first station device, the method further comprising: identifying a third packet in front of a transmission queue for the first station device; and transmitting, using the first station device and to the first multi-link set, the third packet.

Example 24 may include an apparatus comprising means for: determining, by processing circuitry of a multi-link device (MLD), when the MLD is at a first physical location, that a first multi-link set of multiple multi-link sets to which the MLD is associated is an only active link set for a first station device of the MLD; transmitting, using the first station device and to the first multi-link set, a first packet having a traffic identifier; and transmitting, using the first station device and to the first multi-link set, a second packet having the traffic identifier; wherein the first packet and the second packet indicate that the first multi-link set is the only active link set for the first station device of the MLD.

Example 25 may include an apparatus of a controller device for performing Wi-Fi roaming operations, the apparatus comprising: means for determining that a multi-link device (MLD) is transitioning from a first multi-link set to a second multi-link set; means for transmitting first packets having a first traffic identifier to the first multi-link set; means for transmitting the first packets to the second multi-link set; means for transmitting a first instruction to the first multi-link set to transmit a first subset of the first packets to the MLD; means for transmitting a second instruction to the second multi-link set to transmit a second subset of the first packets to the MLD; means for identifying a first scorecard received from the first multi-link set indicating a first sequence number of a first packet, of the first packets, requested by the MLD for retransmission; means for identifying a second scorecard received from the second multi-link set indicating a second sequence number of a second packet, of the first packets, requested by the MLD for retransmission; means for transmitting the first scorecard to the second multi-link set; and means for transmitting the second scorecard to the first multi-link set.

Example 26 may include one or more non-transitory computer-readable media comprising instructions to cause an electronic device, upon execution of the instructions by one or more processors of the electronic device, to perform one or more elements of a method described in or related to any of examples 1-25, or any other method or process described herein.

Example 27 may include an apparatus comprising logic, modules, and/or circuitry to perform one or more elements of a method described in or related to any of examples 1-25, or any other method or process described herein.

Example 28 may include a method, technique, or process as described in or related to any of examples 1-25, or portions or parts thereof.

Example 29 may include an apparatus comprising: one or more processors and one or more computer readable media comprising instructions that, when executed by the one or more processors, cause the one or more processors to perform the method, techniques, or process as described in or related to any of examples 1-25, or portions thereof.

Example 30 may include a method of communicating in a wireless network as shown and described herein.

Example 31 may include a system for providing wireless communication as shown and described herein.

Example 32 may include a device for providing wireless communication as shown and described herein.

Example 33 may include an apparatus of a Wi-Fi AP, the apparatus comprising processing circuitry coupled to storage, the processing circuitry configured to: receive, from a STA, a request to transfer connection from the Wi-Fi AP to another AP; facilitate a logical association of the STA with the another AP based on the received request; and inform the STA that the another AP is ready for handover.

Example 34 may include the apparatus of example 33, and/or some other example herein, wherein the facilitation of the logical association comprises at least one of handshaking, capability negotiation, and/or sharing security context.

Example 35 may include the apparatus of example 33 or example 34, and/or some other example herein, that the processing circuitry is further configured to receive, from the STA, information representative of the handover being ready to be completed.

Example 36 may include the apparatus of any one of examples 33 to 35, and/or some other example herein, that the processing circuitry is further configured to share current block acknowledgment state with the another AP and mirror buffered data units on the another AP.

Example 37 may include the apparatus of any one of examples 33 to 36, and/or some other example herein, that the processing circuitry is further configured to inform the STA that the another AP is prepared to accept the handover.

Example 38 may include the apparatus of any one of examples 33 to 37, and/or some other example herein, that the processing circuitry is further configured to disassociate the STA from the Wi-Fi AP.

Example 39 may include an apparatus of Wi-Fi a device for performing low-latency handover operations, the apparatus comprising processing circuitry coupled to storage, the processing circuitry configured to: identify, when the Wi-Fi device is associated to a first access point (AP), a second AP to which to transfer connection from the first AP; transmit, to the first AP or the second AP, when the Wi-Fi device is associated to the first AP, a request to transfer connection from the first AP to the second AP; identify a response, received from the first AP or the second AP, indicating that the second AP is available to transfer connection from the first AP to the second AP; transmit an association request to the first AP or to the second AP, the association request indicating a request to associate to the second AP; and identify an association response, received from the first AP or from the second AP, indicating that the Wi-Fi device is associated to the second AP.

Example 40 may include the apparatus of example 39, wherein the Wi-Fi device is a single radio station device.

Example 41 may include the apparatus of example 40, wherein the request to transfer connection is transmitted to the first AP, wherein the response is received from the first AP, wherein the association request is transmitted to the first AP, wherein the association response is received from the first AP, and wherein the processing circuitry may further be configured to: determine that channel conditions satisfy first criteria for transferring connection from the first AP to the second AP; transmit, to the first AP, an indication that the channel conditions satisfy the first criteria; determine that channel sounding results with the second AP satisfy second criteria; transmit, to the second AP, in response to the channel sounding results satisfying the second criteria, an acknowledgement; and disassociate from the first AP.

Example 42 may include the apparatus of example 39, wherein the association request is transmitted to the second AP, wherein the association response is received from the second AP, and wherein the Wi-Fi device is an enhanced single radio station device.

Example 43 may include the apparatus of example 42, wherein the processing circuitry may further be configured to: identify an indication, received from the second AP, to transmit the association request, wherein the association request is transmitted based on the indication to transmit the association request; and disassociate from the first AP.

Example 44 may include the apparatus of example 39, wherein the Wi-Fi device is a station device configured to concurrently use dual frequency bands.

Example 45 may include the apparatus of example 44, wherein the request to transfer connection is transmitted to the second AP while the Wi-Fi device is associated to the first AP using a first communication link, wherein the response is received from the second AP while the Wi-Fi device is associated to the first AP using the first communication link, wherein the association request is transmitted to the second AP while the Wi-Fi device is associated to the first AP using the first communication link, wherein the association response is received from the second AP while the Wi-Fi device is associated to the first AP using the first communication link, and wherein the processing circuitry may be further configured to: activate a second communication link with the second AP after association; and deactivate the second communication link.

Example 46 may include the apparatus of any one of examples 39 to 45, which the apparatus may include a transceiver configured to transmit and receive wireless signals comprising the request to transfer, the response, the association request, and the association response.

Example 47 may include the apparatus of example 46, may further include an antenna coupled to the transceiver to transmit the wireless signals.

Example 48 may include a computer-readable storage medium comprising instructions to cause processing circuitry of a Wi-Fi device, upon execution of the instructions by the processing circuitry, to: identify, when the Wi-Fi device is associated to a first access point (AP), a second AP to which to transfer connection from the first AP; transmit, to the first AP or the second AP, when the Wi-Fi device is associated to the first AP, a request to transfer connection from the first AP to the second AP; identify a response, received from the first AP or the second AP, indicating that the second AP is available to transfer connection from the first AP to the second AP; transmit an association request to the first AP or to the second AP, the association request indicating a request to associate to the second AP; and identify an association response, received from the first AP or from the second AP, indicating that the Wi-Fi device is associated to the second AP.

Example 49 may include the computer-readable storage medium of example 48, wherein the Wi-Fi device is a single radio station device.

Example 50 may include the computer-readable storage medium of example 49, wherein the request to transfer connection is transmitted to the first AP, wherein the response is received from the first AP, wherein the association request is transmitted to the first AP, wherein the association response is received from the first AP, and wherein the instructions may further cause the processing circuitry to: determine that channel conditions satisfy first criteria for transferring connection from the first AP to the second AP; transmit, to the first AP, an indication that the channel conditions satisfy the first criteria; determine that channel sounding results with the second AP satisfy second criteria; transmit, to the second AP, in response to the channel sounding results satisfying the second criteria, an acknowledgement; and disassociate from the first AP.

Example 51 may include the computer-readable storage medium of example 48, wherein the association request is transmitted to the second AP, wherein the association response is received from the second AP, and wherein the Wi-Fi device is an enhanced single radio station device.

Example 52 may include the computer-readable storage medium of example 51, wherein the instructions may further cause the processing circuitry to: identify an indication, received from the second AP, to transmit the association request, wherein the association request is transmitted based on the indication to transmit the association request; and disassociate from the first AP.

Example 53 may include the computer-readable storage medium of example 48, wherein the Wi-Fi device is a station device configured to concurrently use dual frequency bands.

Example 54 may include the computer-readable storage medium of example 53, wherein the request to transfer connection is transmitted to the second AP while the Wi-Fi device is associated to the first AP using a first communication link, wherein the response is received from the second AP while the Wi-Fi device is associated to the first AP using the first communication link, wherein the association request is transmitted to the second AP while the Wi-Fi device is associated to the first AP using the first communication link, wherein the association response is received from the second AP while the Wi-Fi device is associated to the first AP using the first communication link, and wherein the instructions may further cause the processing circuitry to: activate a second communication link with the second AP after association; and deactivate the second communication link.

Example 55 may include a method for performing Wi-Fi low-latency handover operations, the method comprising: identifying, by processing circuitry of a Wi-Fi device, when the Wi-Fi device is associated to a first access point (AP), a second AP to which to transfer connection from the first AP; transmitting, by the processing circuitry, to the first AP or the second AP, when the Wi-Fi device is associated to the first AP, a request to transfer connection from the first AP to the second AP; identifying, by the processing circuitry, a response, received from the first AP or the second AP, indicating that the second AP is available to transfer connection from the first AP to the second AP; transmitting, by the processing circuitry, an association request to the first AP or to the second AP, the association request indicating a request to associate to the second AP; and identifying, by the processing circuitry, an association response, received from the first AP or from the second AP, indicating that the Wi-Fi device is associated to the second AP.

Example 56 may include the method of example 55, wherein the Wi-Fi device is a single radio station device.

Example 57 may include the method of example 56, wherein the request to transfer connection is transmitted to the first AP, wherein the response is received from the first AP, wherein the association request is transmitted to the first AP, wherein the association response is received from the first AP, and the method further comprising: determining that channel conditions satisfy first criteria for transferring connection from the first AP to the second AP; transmitting, to the first AP, an indication that the channel conditions satisfy the first criteria; determining that channel sounding results with the second AP satisfy second criteria; transmitting, to the second AP, in response to the channel sounding results satisfying the second criteria, an acknowledgement; and disassociating from the first AP.

Example 58 may include the method of example 55, wherein the association request is transmitted to the second AP, wherein the association response is received from the second AP, and wherein the Wi-Fi device is an enhanced single radio station device.

Example 59 may include the method of example 58, that may further include: identifying an indication, received from the second AP, to transmit the association request, wherein the association request is transmitted based on the indication to transmit the association request; and disassociating from the first AP.

Example 60 may include the method of example 58, wherein the Wi-Fi device is a station device configured to concurrently use dual frequency bands.

Example 61 may include the method of example 60, wherein the request to transfer connection is transmitted to the second AP while the Wi-Fi device is associated to the first AP using a first communication link, wherein the response is received from the second AP while the Wi-Fi device is associated to the first AP using the first communication link, wherein the association request is transmitted to the second AP while the Wi-Fi device is associated to the first AP using the first communication link, wherein the association response is received from the second AP while the Wi-Fi device is associated to the first AP using the first communication link, and the method: activating a second communication link with the second AP after association; and deactivating the second communication link.

Example 62 may include an apparatus of a Wi-Fi device, the apparatus comprising: means for identifying, when the Wi-Fi device is associated to a first access point (AP), a second AP to which to transfer connection from the first AP; means for transmitting, to the first AP or the second AP, when the Wi-Fi device is associated to the first AP, a request to transfer connection from the first AP to the second AP; means for identifying a response, received from the first AP or the second AP, indicating that the second AP is available to transfer connection from the first AP to the second AP; means for transmitting an association request to the first AP or to the second AP, the association request indicating a request to associate to the second AP; and means for identifying an association response, received from the first AP or from the second AP, indicating that the Wi-Fi device is associated to the second AP.

Embodiments according to the disclosure are in particular disclosed in the attached claims directed to a method, a storage medium, a device and a computer program product, wherein any feature mentioned in one claim category, e.g., method, can be claimed in another claim category, e.g., system, as well. The dependencies or references back in the attached claims are chosen for formal reasons only. However, any subject matter resulting from a deliberate reference back to any previous claims (in particular multiple dependencies) can be claimed as well, so that any combination of claims and the features thereof are disclosed and can be claimed regardless of the dependencies chosen in the attached claims. The subject-matter which can be claimed comprises not only the combinations of features as set out in the attached claims but also any other combination of features in the claims, wherein each feature mentioned in the claims can be combined with any other feature or combination of other features in the claims. Furthermore, any of the embodiments and features described or depicted herein can be claimed in a separate claim and/or in any combination with any embodiment or feature described or depicted herein or with any of the features of the attached claims.

The foregoing description of one or more implementations provides illustration and description, but is not intended to be exhaustive or to limit the scope of embodiments to the precise form disclosed. Modifications and variations are possible in light of the above teachings or may be acquired from practice of various embodiments.

Certain aspects of the disclosure are described above with reference to block and flow diagrams of systems, methods, apparatuses, and/or computer program products according to various implementations. It will be understood that one or more blocks of the block diagrams and flow diagrams, and combinations of blocks in the block diagrams and the flow diagrams, respectively, may be implemented by computer-executable program instructions. Likewise, some blocks of the block diagrams and flow diagrams may not necessarily need to be performed in the order presented, or may not necessarily need to be performed at all, according to some implementations.

These computer-executable program instructions may be loaded onto a special-purpose computer or other particular machine, a processor, or other programmable data processing apparatus to produce a particular machine, such that the instructions that execute on the computer, processor, or other programmable data processing apparatus create means for implementing one or more functions specified in the flow diagram block or blocks. These computer program instructions may also be stored in a computer-readable storage media or memory that may direct a computer or other programmable data processing apparatus to function in a particular manner, such that the instructions stored in the computer-readable storage media produce an article of manufacture including instruction means that implement one or more functions specified in the flow diagram block or blocks. As an example, certain implementations may provide for a computer program product, comprising a computer-readable storage medium having a computer-readable program code or program instructions implemented therein, said computer-readable program code adapted to be executed to implement one or more functions specified in the flow diagram block or blocks. The computer program instructions may also be loaded onto a computer or other programmable data processing apparatus to cause a series of operational elements or steps to be performed on the computer or other programmable apparatus to produce a computer-implemented process such that the instructions that execute on the computer or other programmable apparatus provide elements or steps for implementing the functions specified in the flow diagram block or blocks.

Accordingly, blocks of the block diagrams and flow diagrams support combinations of means for performing the specified functions, combinations of elements or steps for performing the specified functions and program instruction means for performing the specified functions. It will also be understood that each block of the block diagrams and flow diagrams, and combinations of blocks in the block diagrams and flow diagrams, may be implemented by special-purpose, hardware-based computer systems that perform the specified functions, elements or steps, or combinations of special-purpose hardware and computer instructions.

Conditional language, such as, among others, "can," "could," "might," or "may," unless specifically stated otherwise, or otherwise understood within the context as used, is generally intended to convey that certain implementations could include, while other implementations do not include, certain features, elements, and/or operations. Thus, such conditional language is not generally intended to imply that features, elements, and/or operations are in any way required for one or more implementations or that one or more implementations necessarily include logic for deciding, with or without user input or prompting, whether these features, elements, and/or operations are included or are to be performed in any particular implementation.

Many modifications and other implementations of the disclosure set forth herein will be apparent having the benefit of the teachings presented in the foregoing descriptions and the associated drawings. Therefore, it is to be understood that the disclosure is not to be limited to the specific implementations disclosed and that modifications and other implementations are intended to be included within the scope of the appended claims. Although specific terms are employed herein, they are used in a generic and descriptive sense only and not for purposes of limitation.

## Claims

1. An apparatus of a Wi-Fi device (151) for performing handover operations, the apparatus comprising processing circuitry (606) configured to:
identify, when the Wi-Fi device is associated to a first access point, AP, (152) a second AP (153) to which to transfer connection from the first AP (152);
transmit, to the first AP (152), when the Wi-Fi device is associated to the first AP (152), a request to transfer connection from the first AP (152) to the second AP (153);
identify a response, received from the first AP (152), representing that the second AP (153) is available to transfer connection from the first AP (152) to the second AP (153);
transmit an association request to the first AP (152), the association request representing a request to associate to the second AP (153); and
identify an association response, received from the first AP (152), representing that the Wi-Fi device is associated to the second AP (153).

2. The apparatus of claim 1, wherein the Wi-Fi device (151) is a single radio station device.

3. The apparatus of claim 2, wherein the request to transfer connection is transmitted to the first AP (152), wherein the response is received from the first AP (152), wherein the association request is transmitted to the first AP (152), wherein the association response is received from the first AP (152), and wherein the processing circuitry (606) is further configured to:
determine that channel conditions satisfy first criteria for transferring connection from the first AP (152) to the second AP (153);
transmit, to the first AP (152), an indication that the channel conditions satisfy the first criteria;

4. The apparatus of claim 3, wherein the processing circuitry (606) is further configured to:
determine that channel sounding results with the second AP (153) satisfy second criteria;
transmit, to the second AP (153), in response to the channel sounding results satisfying the second criteria, an acknowledgement; and
disassociate from the first AP (152).

5. The apparatus of claim 4, wherein the acknowledgment comprises an updated block acknowledgment.

6. The apparatus of claim 4, wherein the updated block acknowledgement is sent to synchronize a block acknowledgment state of the second AP with any updates that occurred between a signaling of a completion of the handover and the completion of the handover.

7. The apparatus of claim 5 or claim 6, wherein a block acknowledgement state is shared between the first AP and the second AP.

8. The apparatus of any of claims 1-7, further comprising a transceiver (610) configured to transmit and receive wireless signals comprising the request to transfer, the response, the association request, and the association response.

9. The apparatus of claim 8, further comprising an antenna (601) coupled to the transceiver (610) to transmit the wireless signals.

10. The apparatus of any one of claim 1-9, further comprising a storage coupled to the processing circuitry (606).

11. A computer-readable storage medium comprising instructions to cause processing circuitry of a Wi-Fi device, upon execution of the instructions by the processing circuitry, to:
identify, when the Wi-Fi device is associated to a first access point, AP, (152) a second AP (153) to which to transfer connection from the first AP (152);
transmit, to the first AP (152), when the Wi-Fi device is associated to the first AP (152), a request to transfer connection from the first AP (152) to the second AP (153);
identify a response, received from the first AP (152), representing that the second AP (153) is available to transfer connection from the first AP (152) to the second AP (153);
transmit an association request to the first AP (152), the association request representing a request to associate to the second AP (153); and
identify an association response, received from the first AP (152), representing that the Wi-Fi device is associated to the second AP (153).

12. A method for performing Wi-Fi handover operations, the method comprising:
identifying, by processing circuitry of a Wi-Fi device, when the Wi-Fi device is associated to a first access point, AP, (152) a second AP (153) to which to transfer connection from the first AP (152);
transmitting, by the processing circuitry (606), to the first AP (152), when the Wi-Fi device is associated to the first AP (152), a request to transfer connection from the first AP (152) to the second AP (153);
identifying, by the processing circuitry (606), a response, received from the first AP (152), representing that the second AP (153) is available to transfer connection from the first AP (152) to the second AP (153);
transmitting, by the processing circuitry (606), an association request to the first AP (152), the association request representing a request to associate to the second AP (153); and
identifying, by the processing circuitry (606), an association response, received from the first AP (152), representing that the Wi-Fi device is associated to the second AP (153).

## Patentansprüche

1. Einrichtung einer Wi-Fi-Vorrichtung (151) zum Durchführen von Handover-Operationen, wobei die Einrichtung eine Verarbeitungsschaltungsanordnung (606) umfasst, die zu Folgendem ausgelegt ist:
wenn die Wi-Fi-Vorrichtung einem ersten Zugangspunkt, AP, (152) zugeordnet ist, Identifizieren eines zweiten AP (153), zu dem eine Verbindung von dem ersten AP (152) verlegt werden soll;
wenn die Wi-Fi-Vorrichtung dem ersten AP (152) zugeordnet ist, Übertragen einer Anforderung zum Verlegen einer Verbindung von dem ersten AP (152) zu dem zweiten AP (153) an den ersten AP (152);
Identifizieren einer Antwort, die von dem ersten AP (152) empfangen wird und darstellt, dass der zweite AP (153) zum Verlegen einer Verbindung von dem ersten AP (152) zu dem zweiten AP (153) verfügbar ist;
Übertragen einer Zuordnungsanforderung an den ersten AP (152), wobei die Zuordnungsanforderung eine Anforderung zur Zuordnung zu dem zweiten AP (153) darstellt; und
Identifizieren einer Zuordnungsantwort, die von dem ersten AP (152) empfangen wird und darstellt, dass die Wi-Fi-Vorrichtung dem zweiten AP (153) zugeordnet ist.

2. Einrichtung nach Anspruch 1, wobei die Wi-Fi-Vorrichtung (151) eine einzelne Funkstationsvorrichtung ist.

3. Einrichtung nach Anspruch 2, wobei die Anforderung zum Verlegen einer Verbindung an den ersten AP (152) übertragen wird, wobei die Antwort von dem ersten AP (152) empfangen wird, wobei die Zuordnungsanforderung an den ersten AP (152) übertragen wird, wobei die Zuordnungsantwort von dem ersten AP (152) empfangen wird, und wobei die Verarbeitungsschaltungsanordnung (606) ferner zu Folgendem ausgelegt ist:
Bestimmen, dass Kanalbedingungen erste Kriterien zum Verlegen einer Verbindung von dem ersten AP (152) zu dem zweiten AP (153) erfüllen;
Übertragen einer Angabe an den ersten AP (152), dass die Kanalbedingungen die ersten Kriterien erfüllen.

4. Einrichtung nach Anspruch 3, wobei die Verarbeitungsschaltungsanordnung (606) ferner zu Folgendem ausgelegt ist:
Bestimmen, dass Kanalsondierungsergebnisse mit dem zweiten AP (153) zweite Kriterien erfüllen;
Senden in Reaktion darauf, dass die Kanalsondierungsergebnisse die zweiten Kriterien erfüllen, einer Bestätigung an den zweiten AP (153); und
Aufheben der Zuordnung zu dem ersten AP (152).

5. Einrichtung nach Anspruch 4, wobei die Bestätigung eine aktualisierte Blockbestätigung umfasst.

6. Einrichtung nach Anspruch 4, wobei die aktualisierte Blockbestätigung gesendet wird, um einen Blockbestätigungszustand des zweiten AP mit jeglichen Aktualisierungen zu synchronisieren, die zwischen einer Signalisierung eines Abschlusses des Handovers und dem Abschluss des Handovers aufgetreten sind.

7. Einrichtung nach Anspruch 5 oder Anspruch 6, wobei ein Blockbestätigungszustand zwischen dem ersten AP und dem zweiten AP geteilt wird.

8. Einrichtung nach einem der Ansprüche 1-7, ferner umfassend einen Sendeempfänger (610), der zum Übertragen und Empfangen von Drahtlossignalen ausgelegt ist, die die Verlegungsanforderung, die Antwort, die Zuordnungsanforderung und die Zuordnungsantwort umfassen.

9. Einrichtung nach Anspruch 8, ferner umfassend eine Antenne (601), die mit dem Sendeempfänger (610) gekoppelt ist, um die Drahtlossignale zu übertragen.

10. Vorrichtung nach einem der Ansprüche 1-9, ferner umfassend einen Speicher, der mit der Verarbeitungsschaltung (606) gekoppelt ist.

11. Computerlesbares Speichermedium, umfassend Anweisungen, um eine Verarbeitungsschaltungsanordnung einer Wi-Fi-Vorrichtung bei Ausführung der Anweisungen durch die Verarbeitungsschaltungsanordnung zu Folgendem zu veranlassen:
wenn die Wi-Fi-Vorrichtung einem ersten Zugangspunkt, AP, (152) zugeordnet ist, Identifizieren eines zweiten AP (153), zu dem eine Verbindung von dem ersten AP (152) verlegt werden soll;
wenn die Wi-Fi-Vorrichtung dem ersten AP (152) zugeordnet ist, Übertragen einer Anforderung zum Verlegen einer Verbindung von dem ersten AP (152) zu dem zweiten AP (153) an den ersten AP (152);
Identifizieren einer Antwort, die von dem ersten AP (152) empfangen wird und darstellt, dass der zweite AP (153) zum Verlegen einer Verbindung von dem ersten AP (152) zu dem zweiten AP (153) verfügbar ist;
Übertragen einer Zuordnungsanforderung an den ersten AP (152), wobei die Zuordnungsanforderung eine Anforderung zur Zuordnung zu dem zweiten AP (153) darstellt; und
Identifizieren einer Zuordnungsantwort, die von dem ersten AP (152) empfangen wird und darstellt, dass die Wi-Fi-Vorrichtung dem zweiten AP (153) zugeordnet ist.

12. Verfahren zum Durchführen von Wi-Fi-Handover-Operationen, wobei das Verfahren Folgendes umfasst:
wenn die Wi-Fi-Vorrichtung einem ersten Zugangspunkt, AP, (152) zugeordnet ist, Identifizieren eines zweiten AP (153), zu dem eine Verbindung von dem ersten AP (152) verlegt werden soll, durch eine Verarbeitungsschaltungsanordnung einer Wi-Fi-Vorrichtung;
wenn die Wi-Fi-Vorrichtung dem ersten AP (152) zugeordnet ist, Übertragen einer Anforderung zum Verlegen einer Verbindung von dem ersten AP (152) zu dem zweiten AP (153) durch die Verarbeitungsschaltungsanordnung (606) der Wi-Fi-Vorrichtung an den ersten AP (152);
Identifizieren einer Antwort, die von dem ersten AP (152) empfangen wird und darstellt, dass der zweite AP (153) zum Verlegen einer Verbindung von dem ersten AP (152) zu dem zweiten AP (153) verfügbar ist, durch die Verarbeitungsschaltungsanordnung (606) der Wi-Fi-Vorrichtung;
Übertragen einer Zuordnungsanforderung durch die Verarbeitungsschaltungsanordnung (606) der Wi-Fi-Vorrichtung an den ersten AP (152), wobei die Zuordnungsanforderung eine Anforderung zur Zuordnung zu dem zweiten AP (153) darstellt; und
Identifizieren einer Zuordnungsantwort, die von dem ersten AP (152) empfangen wird und darstellt, dass die Wi-Fi-Vorrichtung dem zweiten AP (153) zugeordnet ist, durch die Verarbeitungsschaltungsanordnung (606) der Wi-Fi-Vorrichtung.

## Revendications

1. Appareil d'un dispositif Wi-Fi (151) servant à effectuer des opérations de transfert intercellulaire, l'appareil comprenant des circuits de traitement (606) configurés pour :
identifier, lorsque le dispositif Wi-Fi est associé à un premier point d'accès, AP (152), un deuxième AP (153) vers lequel transférer la connexion depuis le premier AP (152) ;
transmettre, au premier AP (152), lorsque le dispositif Wi-Fi est associé au premier AP (152), une demande de transfert de connexion du premier AP (152) vers le deuxième AP (153) ;
identifier une réponse, reçue du premier AP (152), indiquant que le deuxième AP (153) est disponible pour transférer la connexion du premier AP (152) vers le deuxième AP (153) ;
transmettre une demande d'association au premier AP (152), la demande d'association représentant une demande d'association au deuxième AP (153) ; et
identifier une réponse d'association, reçue du premier AP (152), indiquant que le dispositif Wi-Fi est associé au deuxième AP (153).

2. Appareil selon la revendication 1, dans lequel le dispositif Wi-Fi (151) est un dispositif de station radio unique.

3. Appareil selon la revendication 2, dans lequel la demande de transfert de connexion est transmise au premier AP (152), dans lequel la réponse est reçue du premier AP (152), dans lequel la demande d'association est transmise au premier AP (152), dans lequel la réponse d'association est reçue du premier AP (152), et dans lequel les circuits de traitement (606) sont en outre configurés pour :
déterminer que les conditions de canal vérifient des premiers critères de transfert de connexion du premier AP (152) vers le deuxième AP (153) ;
transmettre, au premier AP (152), une indication du fait que les conditions de canal vérifient les premiers critères ;

4. Appareil selon la revendication 3, dans lequel les circuits de traitement (606) sont en outre configurés pour : déterminer que des résultats de sondage de canal avec le deuxième AP (153) vérifient des deuxièmes critères ;
transmettre, au deuxième AP (153), en réponse aux fait que les résultats de sondage de canal vérifient les deuxièmes critères, un accusé de réception ; et
dissocier du premier AP (152).

5. Appareil selon la revendication 4, dans lequel l'accusé de réception comprend un accusé de réception de bloc mis à jour.

6. Appareil selon la revendication 4, dans lequel l'accusé de réception de bloc mis à jour est envoyé pour synchroniser un état d'accusé de réception de bloc du deuxième AP avec toutes les mises à jour qui se sont produites entre une signalisation de l'achèvement du transfert intercellulaire et l'achèvement du transfert intercellulaire.

7. Appareil selon la revendication 5 ou la revendication 6, dans lequel un état d'accusé de réception de bloc est partagé entre le premier AP et le deuxième AP.

8. Appareil selon l'une quelconque des revendications 1 à 7, comprenant en outre un émetteur-récepteur (610) configuré pour transmettre et recevoir des signaux sans fil comprenant la demande de transfert, la réponse, la demande d'association et la réponse d'association.

9. Appareil selon la revendication 8, comprenant en outre une antenne (601) couplée à l'émetteur-récepteur (610) pour transmettre les signaux sans fil.

10. Appareil selon l'une quelconque des revendications 1 à 9, comprenant en outre une zone de stockage couplée aux circuits de traitement (606).

11. Support de stockage lisible par ordinateur comprenant des instructions pour amener les circuits de traitement d'un dispositif Wi-Fi, lors de l'exécution des instructions par le circuit de traitement, à :
identifier, lorsque le dispositif Wi-Fi est associé à un premier point d'accès, AP (152), un deuxième AP (153) vers lequel transférer la connexion depuis le premier AP (152) ;
transmettre, au premier AP (152), lorsque le dispositif Wi-Fi est associé au premier AP (152), une demande de transfert de connexion du premier AP (152) vers le deuxième AP (153) ;
identifier une réponse, reçue du premier AP (152), indiquant que le deuxième AP (153) est disponible pour transférer la connexion du premier AP (152) vers le deuxième AP (153) ;
transmettre une demande d'association au premier AP (152), la demande d'association représentant une demande d'association au deuxième AP (153) ; et
identifier une réponse d'association, reçue du premier AP (152), indiquant que le dispositif Wi-Fi est associé au deuxième AP (153).

12. Procédé permettant d'effectuer des opérations de transfert intercellulaire Wi-Fi, le procédé comprenant les étapes consistant à :
identifier, par le biais de circuits de traitement d'un dispositif Wi-Fi, lorsque le dispositif Wi-Fi est associé à un premier point d'accès, AP (152), un deuxième AP (153) vers lequel transférer la connexion depuis le premier AP (152) ;
transmettre, par les circuits de traitement (606), au premier AP (152), lorsque le dispositif Wi-Fi est associé au premier AP (152), une demande de transfert de connexion du premier AP (152) vers le deuxième AP (153) ;
identifier, par les circuits de traitement (606), une réponse reçue du premier AP (152), indiquant que le deuxième AP (153) est disponible pour transférer la connexion du premier AP (152) vers le deuxième AP (153) ;
transmettre, par le circuit de traitement (606), une demande d'association au premier AP (152), la demande d'association représentant une demande d'association au deuxième AP (153) ; et
identifier, par le circuit de traitement (606), une réponse d'association, reçue du premier AP (152), indiquant que le dispositif Wi-Fi est associé au deuxième AP (153).
